# EUROPEAN PATENT APPLICATION

(11) **EP 4 694 320 A1**
(43) Date of publication of application: **11.02.2026**
(21) Application number: 24795637.8
(22) Date of filing: 13.03.2024
(51) Int. Cl.: H04W 28/24

(54) **COMMUNICATION METHOD AND DEVICE**

(30) Priority: 24.04.2023 CN 202310472948; 28.07.2023 CN 202310947164
(71) Applicant: Huawei Technologies Co., Ltd., Shenzhen, Guangdong 518129 (CN)
(72) Inventor: DOU, Fenghui, Shenzhen, Guangdong 518129 (CN); ZHANG, Yanqing, Shenzhen, Guangdong 518129 (CN)
(74) Representative: Goddar, Heinz J.
(86) International application number: PCT/CN2024/081290
(87) International publication number: WO 2024/222254

(57) **Abstract**

This application relates to a communication method and a device. The method is applied to an access network device. The access network device is located in a data network, and a first UE communicates with the data network via a second UE. In response to receiving a first data packet during downlink transmission, the access network device obtains first data and second data from the first data packet. Then, the access network device sends at least one of the first data or the second data to the second UE based on first handling, where the first handling is associated with a first link state and a second link state. A first link is a communication link between the first UE and the second UE, and a second link is a communication link between the second UE and the access network device. In this application, in a scenario in which the first UE communicates with the data network via a relay of the second UE, data transmission can be optimized, and impact of an adverse case on data transmission can be alleviated or reduced.

## Description

This application claims priorities to Chinese Patent Application No. 202310472948.6, filed with the China National Intellectual Property Administration on April 24, 2023 and entitled "QOS CONTROL METHOD AND DEVICE", and to Chinese Patent Application No. 202310947164.4, field with the China National Intellectual Property Administration on July 28, 2023 and entitled "COMMUNICATION METHOD AND DEVICE", both of which are incorporated herein by reference in their entireties.

### TECHNICAL FIELD

This application relates to the field of mobile communication, and in particular, to a communication method and a device.

### BACKGROUND

A service such as virtual reality (virtual reality, VR), augmented reality (augmented reality, AR), extended reality (extrended reality, XR), or mixed reality (mixed reality, MR) has a high requirement on a data transmission rate, a delay, and the like. To run the service such as virtual reality (virtual reality, VR), augmented reality (augmented reality, AR), extended reality (extrended reality, XR), or mixed reality (mixed reality, MR), a user usually communicates with a data network by using a first user equipment (for example, AR/VR glasses in a wearable device) and a second user equipment (for example, a smartphone, a tablet computer, or a customer premises equipment (CPE)) serving as a relay device (to be specific, the first user equipment is communicatively connected to the second user equipment, and the first user equipment communicates with the data network via the second user equipment).

In the foregoing scenario, a case such as congestion sometimes occurs during data transmission, affecting data transmission. Therefore, how to provide a communication method and a device to optimize data transmission and alleviate or reduce impact on data transmission in the foregoing case is a technical problem that urgently needs to be resolved.

### SUMMARY

For ease of description, a communication link between a first user equipment (user equipment, UE) and a second UE is referred to as a first link, and a communication link between the second UE and an access network device is referred to as a second link. A state of the first link is referred to as a first link state, and a state of the second link is referred to as a second link state. A requirement of a core network device (for example, a session management function SMF) for the first link is referred to as a first parameter, and a requirement of the core network device for the second link is referred to as a second parameter. The first parameter or the second parameter may be obtained by the core network device SMF based on a requirement of an application function (application function, AF) entity in an application server for a core network. Data transmitted on the first link is referred to as first link data, and data transmitted on the second link is referred to as second link data. A transmission rate of the first link data on the first link is referred to as a first transmission rate, and a transmission rate of the second link data on the second link is referred to as a second transmission rate. A transmission delay of the first link data on the first link is referred to as a first delay, and a transmission delay of the second link data on the second link is referred to as a second delay. The first link state includes at least one of the first transmission rate, the first delay, or the like. The second link state includes at least one of the second transmission rate, the second delay, or the like.

Because the first link is different from the second link, the first link state is also different from the second link state. Correspondingly, the first transmission rate, the second transmission rate, and the like are also different. In this way, an overall data transmission rate is affected by a lower one of the first transmission rate and the second transmission rate. Similarly, an overall delay is also affected by a lower one of the first delay and the second delay. In other words, because the first link state is different from the second link state, the overall data transmission rate may not be high, or the overall delay may be high.

Conventionally, only the second link state is considered before data transmission on the second link. Only the first link state is considered before data transmission on the first link. Data transmission on the first link is used as an example. In this case, when the first link data is transmitted to the second link at the first transmission rate, the first link data may be limited by the second link state, resulting in a low overall data transmission rate. Similarly, data transmission on the second link is used as an example. In this case, when the second link data is transmitted to the first link at the second transmission rate, the second link data may be limited by the first link state, resulting in a low overall data transmission rate.

A case related to the overall delay is similar to the foregoing descriptions, and details are not described herein again.

Therefore, in a scenario in which the first UE communicates with the data network via a relay of the second UE, a case such as congestion sometimes occurs during data transmission, affecting data transmission. Therefore, how to provide a communication method and a device to optimize data transmission and alleviate or reduce impact on data transmission in the foregoing case is a technical problem that urgently needs to be resolved.

Optionally, in the scenario in which the first UE communicates with the data network via the relay of the second UE, a plurality of cases sometimes occur during data transmission (for example, congestion sometimes occurs during data transmission, and congestion sometimes does not occur during data transmission). How to provide a dynamically adjusted communication method and device to be compatible with the plurality of cases to optimize data transmission is a technical problem that urgently needs to be resolved.

Optionally, in the scenario in which the first UE communicates with the data network via the relay of the second UE, when an overall data transmission rate is not high, an overall delay is high, or the like, how to alleviate impact on data transmission and ensure user experience is a technical problem that urgently needs to be resolved.

Optionally, in the scenario in which the first UE communicates with the data network via the relay of the second UE, how to provide a communication method and a device to alleviate impact on data transmission and ensure user experience during downlink transmission is a technical problem that urgently needs to be resolved.

Optionally, in the scenario in which the first UE communicates with the data network via the relay of the second UE, how to provide a communication method and a device to alleviate impact on data transmission and ensure user experience during uplink transmission is a technical problem that urgently needs to be resolved.

Optionally, in the scenario in which the first UE communicates with the data network via the relay of the second UE, how to provide a communication method and a device to facilitate data control or management during data transmission, improve efficiency, and ensure user experience is a technical problem that urgently needs to be resolved.

It should be noted that any two or more of the foregoing listed technical problems may be freely combined, and a technical problem obtained through the combination is also a technical problem to be resolved in this application.

For example, in the scenario in which the first UE communicates with the data network via the relay of the second UE, how to provide a communication method and a device to be compatible with a plurality of cases during data transmission to optimize data transmission and how to alleviate impact on data transmission and ensure user experience during downlink transmission are also technical problems that urgently need to be resolved.

In some embodiments, the first UE may be referred to as a remote user equipment (remote UE), the second UE may be referred to as a relay user equipment (relay UE), and the access network device may be referred to as a radio access network (radio access network, RAN).

To resolve at least one of the foregoing technical problems, this application provides a communication method and a device.

According to a first aspect, a communication method is provided, and is applied to a first network device. The first network device communicates with a second user equipment UE, and the method includes:
receiving a first message, where the first message includes an identifier of a first quality of service flow QoS flow and a first QoS parameter which is protocol data unit set PDU set-based;
determining, by the first network device, that the second UE provides a first UE with a function of supporting a connection to a data network; and
performing PDU set-based first handling on the first QoS flow based on a first link state and a second link state, where a first link is a communication link between the first UE and the second UE, a second link is a communication link between the second UE and the first network device, the first QoS flow belongs to the first UE or the second UE, the first link state indicates a state of the first link, and the second link state indicates a state of the second link.

In this way, in a scenario in which the first UE communicates with the data network via a relay of the second UE, link states of different links involved in subsequent transmission can be comprehensively considered for data transmission on the second link, thereby optimizing PDU set-based transmission.

According to the first aspect, before sending at least one of first data or second data to the second UE based on the first handling, the method includes:
determining the first handling of the first data and the second data during transmission on the second link, where the first handling is determined based on the first link state and the second link state.

In this way, in a scenario in which the first UE communicates with the data network via a relay of the second UE, before the first handling is performed, the first handling needs to be first determined based on the first link state and the second link state, so that it is more scientific and reasonable.

According to any one of the first aspect or the implementations of the first aspect, that the first QoS flow belongs to the second UE includes:
receiving first indication information; and
determining, based on the first network device, that the second UE provides the first UE with the function of supporting the connection to the data network.

According to any one of the first aspect or the implementations of the first aspect, the method further includes:
the first indication information indicates that:
the first QoS flow is used by the second UE for transmission of relay data, and the relay data includes data transmitted between the first UE and the data network via the second UE; or
the second UE provides, by using the first QoS flow, the first UE with the function of supporting the connection to the network.

According to any one of the first aspect or the implementations of the first aspect,
the first indication information is first information from a second network device; or
the first indication information is second information from the second UE.

According to any one of the first aspect or the implementations of the first aspect, the method includes: The second UE provides, by using an L3 relay or a Wi-Fi hotspot, the first UE with the function of supporting the connection to the data network.

According to any one of the first aspect or the implementations of the first aspect, the first QoS flow belongs to the first UE,
determining that the second UE provides, by using an L2 relay, the first UE with the function of supporting the connection to the data network.

According to any one of the first aspect or the implementations of the first aspect, receiving second indication information, where the second indication information indicates to
send PDU set information corresponding to downlink data to the second UE when sending, to the second UE, the downlink data transmitted by using the first QoS flow.

According to any one of the first aspect or the implementations of the first aspect, determining, by the first network device, to perform the first handling on the first QoS flow based on the first link state and the second link state includes:
receiving a first data packet during downlink transmission in the first QoS flow, and obtaining first data and second data from the first data packet; and
sending at least one of the first data or the second data to the second UE based on the first handling.

According to any one of the first aspect or the implementations of the first aspect, before sending the at least one of the first data or the second data to the second UE based on the first handling, the method includes:
determining the first handling of the first data and the second data during transmission on the second link, where the first handling is determined based on the first link state and the second link state.

According to any one of the first aspect or the implementations of the first aspect,
when the first link state indicates a first state, the first handling indicates a first handling manner; or
when the first link state indicates a second state, the first handling indicates a second handling manner.

The first state is different from the second state, and the first handling manner is different from the second handling manner.

In this way, in a scenario in which the first UE communicates with the data network via a relay of the second UE, dynamic adjustment can be performed based on the first link state and the second link state, thereby optimizing transmission.

According to any one of the first aspect or the implementations of the first aspect, the first link state is obtained by a RAN from the second UE.

According to any one of the first aspect or the implementations of the first aspect, the second link state is sensed by the RAN.

According to any one of the first aspect or the implementations of the first aspect, before receiving the first data packet during downlink transmission, the method includes: obtaining the first link state from the second UE.

According to any one of the first aspect or the implementations of the first aspect, after receiving the first data packet during downlink transmission, the method includes: obtaining the first link state from the second UE.

According to any one of the first aspect or the implementations of the first aspect, before receiving the first data packet during downlink transmission, the method includes: The RAN senses the second link state.

According to any one of the first aspect or the implementations of the first aspect, after receiving the first data packet during downlink transmission, the method includes: The RAN senses the second link state.

According to any one of the first aspect or the implementations of the first aspect, the first data includes a first protocol data unit set PDU set and first PDU set information, the second data includes a second PDU set and second PDU set information, the first PDU set information indicates a feature of the first PDU set, and the second PDU set information indicates a feature of the second PDU set.

In this way, in a scenario in which the first UE communicates with the data network via a relay of the second UE, it is more convenient to control or manage data during data transmission on the first link.

According to any one of the first aspect or the implementations of the first aspect, based on the first link state and the second link state includes: based on the first link state, the second link state, the first PDU set information, and the second PDU set information.

According to any one of the first aspect or the implementations of the first aspect,
when the first link state indicates the first state, the first state is congested, and the first PDU set is more important than the second PDU set, the first handling manner is sending the first PDU set and discarding the second PDU set on the second link.

That the first PDU set is more important than the second PDU set is determined based on the first PDU set information and the second PDU set information.

It should be noted that importance or priorities may be relative. For example, importance of the first data is a first level, importance of the second data is a second level, and the first level is higher than the second level (that is, the first data is more important than the second data). For another example, a priority of the first data is a first priority, a priority of the second data is a second priority, and the first priority is higher than the second priority (that is, the first data is prior to the second data).

In this way, in a scenario in which the first UE communicates with the data network via a relay of the second UE, transmission of data with high importance can be ensured, thereby ensuring user experience.

Further, during downlink transmission, after transmission of second link data and before transmission of first link data, how to ensure transmission of the data with high importance is considered, thereby ensuring user experience.

According to any one of the first aspect or the implementations of the first aspect,
when the first link state indicates the first state, the first state is congested, and the first PDU set is prior to the second PDU set, the first handling manner is sending the first PDU set and discarding the second PDU set on the second link.

That the first PDU set is prior to the second PDU set is obtained based on the first PDU set information and the second PDU set information.

In this way, in a scenario in which the first UE communicates with the data network via a relay of the second UE, when an overall data transmission rate is not high, transmission of data with a high priority can be ensured, thereby ensuring user experience.

It should be noted that importance or priorities may alternatively be absolute. For example, importance of the first data is a first level, importance of the second data is a second level, the first level is high, and the second level is low (that is, the first data is more important than the second data). For another example, a priority of the first data is a first priority, a priority of the second data is a second priority, the first priority is high, and the second priority is low (that is, the first data is prior to the second data).

According to any one of the first aspect or the implementations of the first aspect,
when the first link state indicates the first state, the first state is congested, the first PDU set is important, and the second PDU set is unimportant, the first handling manner is sending the first PDU set and discarding the second PDU set on the second link.

That the first PDU set is important is determined based on the first PDU set information, and that the second PDU set is unimportant is determined based on the second PDU set information.

According to any one of the first aspect or the implementations of the first aspect,
when the first link state indicates the first state, the first state is congested, the first PDU set is preferred, and the second PDU set is not preferred, the first handling manner is sending the first PDU set and discarding the second PDU set on the second link.

That the first PDU set is preferred is obtained based on the first PDU set information, and that the second PDU set is not preferred is obtained based on the second PDU set information.

According to any one of the first aspect or the implementations of the first aspect,
when the first link state indicates the first state, the first state is congested, the second link state indicates the second state, the second state is non-congested, and the first PDU set is more important than the second PDU set, the first handling manner is sending the first PDU set and discarding the second PDU set on the second link.

That the first PDU set is more important than the second PDU set is determined based on the first PDU set information and the second PDU set information.

According to any one of the first aspect or the implementations of the first aspect,
when the first link state indicates the first state, the first state is congested, the second link state indicates the second state, the second state is non-congested, the first PDU set is important, and the second PDU set is unimportant, the first handling manner is sending the first PDU set and discarding the second PDU set on the second link.

That the first PDU set is important is determined based on the first PDU set information, and that the second PDU set is unimportant is determined based on the second PDU set information.

According to any one of the first aspect or the implementations of the first aspect,
when the first link state indicates the first state, the first state is congested, the second link state indicates the second state, the second state is non-congested, the first PDU set is preferred, and the second PDU set is not preferred, the first handling manner is sending the first PDU set and discarding the second PDU set on the second link.

That the first PDU set is preferred is obtained based on the first PDU set information, and that the second PDU set is not preferred is obtained based on the second PDU set information.

According to any one of the first aspect or the implementations of the first aspect,
when the first link state indicates the first state, the first state is congested, the second link state indicates the second state, the second state is non-congested, and the first PDU set is more important than the second PDU set, the first handling manner is sending the first PDU set and discarding the second PDU set on the second link.

That the first PDU set is more important than the second PDU set is determined based on the first PDU set information and the second PDU set information.

According to any one of the first aspect or the implementations of the first aspect,
when the first link state indicates the first state, the first state is congested, the second link state indicates the second state, the second state is non-congested, and the first PDU set is prior to the second PDU set, the first handling manner is sending the first PDU set and discarding the second PDU set on the second link.

That the first PDU set is prior to the second PDU set is obtained based on the first PDU set information and the second PDU set information.

According to any one of the first aspect or the implementations of the first aspect,
when the first link state indicates the second state, the second state is non-congested, the second link state indicates the second state, the second state is non-congested, and the first PDU set is more important than the second PDU set, the first handling manner is sending the first PDU set and the second PDU set on the second link.

That the first PDU set is more important than the second PDU set is determined based on the first PDU set information and the second PDU set information.

In this way, in a scenario in which the first UE communicates with the data network via a relay of the second UE, when an overall data transmission rate is high, transmission of both data with high importance and data with low importance can be ensured, thereby ensuring user experience.

According to any one of the first aspect or the implementations of the first aspect,
when the first link state indicates the second state, the second state is non-congested, the second link state indicates the second state, the second state is non-congested, and the first PDU set is prior to the second PDU set, the first handling manner is sending the first PDU set and the second PDU set on the second link.

That the first PDU set is prior to the second PDU set is obtained based on the first PDU set information and the second PDU set information.

According to any one of the first aspect or the implementations of the first aspect,
when the first link state indicates the second state, the second state is non-congested, the second link state indicates the second state, the second state is non-congested, the first PDU set is important, and the second PDU set is unimportant, the first handling manner is sending the first PDU set and the second PDU set on the second link.

That the first PDU set is important and the second PDU set is unimportant is determined based on the first PDU set information and the second PDU set information.

According to any one of the first aspect or the implementations of the first aspect,
when the first link state indicates the second state, the second state is non-congested, the second link state indicates the second state, the second state is non-congested, the first PDU set is preferred, and the second PDU set is not preferred, the first handling manner is sending the first PDU set and the second PDU set on the second link.

That the first PDU set is preferred is obtained based on the first PDU set information, and that the second PDU set is not preferred is obtained based on the second PDU set information.

According to any one of the first aspect or the implementations of the first aspect,
when the first link state indicates the second state, the second state is non-congested, and the first PDU set is more important than the second PDU set, the second handling manner is sending the first PDU set and the second PDU set on the second link.

That the first PDU set is more important than the second PDU set is determined based on the first PDU set information and the second PDU set information.

According to any one of the first aspect or the implementations of the first aspect,
when the first link state indicates the second state, the second state is non-congested, and the first PDU set is prior to the second PDU set, the second handling manner is sending the first PDU set and the second PDU set on the second link.

That the first PDU set is prior to the second PDU set is obtained based on the first PDU set information and the second PDU set information.

According to any one of the first aspect or the implementations of the first aspect,
when the first link state indicates the second state, the second state is non-congested, the first PDU set is important, and the second PDU set is unimportant, the second handling manner is sending the first PDU set and the second PDU set on the second link.

That the first PDU set is important is determined based on the first PDU set information, and that the second PDU set is unimportant is determined based on the second PDU set information.

According to any one of the first aspect or the implementations of the first aspect,
when the first link state indicates the second state, the second state is non-congested, the first PDU set is preferred, and the second PDU set is not preferred, the second handling manner is sending the first PDU set and the second PDU set on the second link.

That the first PDU set is preferred is obtained based on the first PDU set information, and that the second PDU set is not preferred is obtained based on the second PDU set information.

According to any one of the first aspect or the implementations of the first aspect, before receiving the first data packet during downlink transmission,
determining to send protocol data unit set PDU set information corresponding to downlink data to the second UE after receiving the downlink data, where the PDU set information indicates a feature of a corresponding PDU set.

According to any one of the first aspect or the implementations of the first aspect, before receiving the first data packet during downlink transmission,
receiving a first message, where the first message includes first information and a first identifier, the first message is a message received through a first interface, and the first identifier indicates a first quality of service flow QoS flow; and
in response to receiving the first message, determining, by the RAN, handling of downlink data during transmission on the second link based on the first link state and the second link state when determining that the downlink data is received;
in response to receiving the first message, the first information indicates that the RAN determines handling of downlink data during transmission on the second link based on the first link state and the second link state when determining that the downlink data is received by using the first QoS flow; or
in response to receiving the first message, the first information indicates that downlink data received by the RAN by using the first QoS flow is relay data, and the relay data is data to be transmitted by the second UE to the first UE.

Optionally, the first information is relay indication (Relay indication) information.

According to any one of the first aspect or the implementations of the first aspect, the first message includes a PDU set quality of service QoS parameter, and the PDU set QoS parameter indicates a requirement that needs to be met when data transmitted by using the first QoS flow is transmitted from the RAN to the first UE.

According to any one of the first aspect or the implementations of the first aspect, both the first PDU set and the second PDU set are included in data transmitted by using the first QoS flow and that is in first downlink data, and the first downlink data is from an AF in an application server.

According to any one of the first aspect or the implementations of the first aspect, before receiving the first data packet during downlink transmission, the method includes:
receiving a second message, where the second message indicates to establish the first QoS flow, and the second message is a message received through a second interface.

According to any one of the first aspect or the implementations of the first aspect, the first interface is an N2 interface, the second interface is an N1 interface, the first handling indicates first QoS handling (QoS handling), and the first QoS handling is associated with the first QoS flow.

According to any one of the first aspect or the implementations of the first aspect, before receiving the first data packet during downlink transmission, the RAN learns that the second UE performs a layer 2 (Layer 2, L2) relay (Relay) for the first UE.

In this way, an L2 relay scenario is covered.

According to any one of the first aspect or the implementations of the first aspect, the RAN learns, by using the first information, that the second UE performs a layer 3 L3 (Layer 3, L3) relay (Relay) for the first UE.

Optionally, the first information is relay indication (Relay indication) information.

In this way, an L3 relay scenario is covered.

According to any one of the first aspect or the implementations of the first aspect,
the second UE is a relay user equipment relay UE, and the first UE is a remote user equipment remote UE; or
the second UE is a hotspot UE, and a hotspot is a Wi-Fi hotspot.

According to any one of the first aspect or the implementations of the first aspect, the first link is a link established based on a proximity service communication (Proximity Service Communication 5, PC5) interface, and the second link is a link established based on a universal mobile telecommunications system terrestrial radio access network (UMTS Terrestrial Radio Access Network and the UE, Uu) interface.

According to any one of the first aspect or the implementations of the first aspect, the first link state indicates a relationship between a first network capability and a first network load, the second link state indicates a relationship between a second network capability and a second network load, the first network capability is maximum communication traffic supported by a first network, the first network load is a load of the first network, the second network capability is maximum communication traffic supported by a second network, and the second network load is a load of the second network.

According to a second aspect, a communication method is provided, and is applied to a second user equipment UE. The second UE communicates with a first UE, the first UE communicates with a data network via the second UE, and the method includes:
obtaining a first parameter, where the first parameter indicates a protocol data unit set PDU set-based QoS control parameter of a first quality of service flow QoS flow, and the first QoS flow is a QoS flow used for communication between the first UE and the second UE; and
performing PDU set-based second handling on the first quality of service flow QoS flow.

In this way, in a scenario in which the first UE communicates with the data network via a relay of the second UE, transmission between the first UE and the second UE (which is subsequently referred to as a first link) can meet a requirement of a network on transmission, so that overall transmission can be optimized.

According to the second aspect, before sending at least one of first data or second data to the first UE based on the second handling,
determining the second handling of third data and fourth data during transmission on a first link, where the second handling is determined based on the first parameter.

In this way, in a scenario in which the first UE communicates with the data network via a relay of the second UE, before the second handling is performed, the second handling needs to be first determined based on the first parameter, so that it is more scientific and reasonable.

According to any one of the second aspect or the implementations of the second aspect,
the first parameter is obtained by the second UE from a second core network device; or
the first parameter is obtained by the second UE based on a second parameter, and the second parameter is obtained by the second UE from a second core network device.

In this way, in a scenario in which the first UE communicates with the data network via a relay of the second UE, two possible implementations of directly obtaining the first parameter and indirectly obtaining the first parameter can be provided.

According to any one of the second aspect or the implementations of the second aspect, the first parameter includes but is not limited to at least one of the following parameters:
a PC5 protocol data unit set delay budget (PC5 PDU Set Delay Budget, PC5-PSDB), used to set a first preset delay, where a transmission delay of any PDU set between the first UE and the second UE is less than or equal to the first preset delay;
a PC5 protocol data unit set error rate (PC5 PDU Set Error Rate, PC5-PSER), used to set a ratio of a quantity of PDU sets that have been handled by the second UE but have not been successfully handled by the first UE, where the rate includes a first preset error rate, a first ratio needs to be less than or equal to the first preset error rate, the first ratio is a ratio of a quantity of first PDU sets to a quantity of second PDU sets, the quantity of first PDU sets is a quantity of PDU sets that have been sent by the second UE but have not been successfully received by the first UE, and the quantity of second PDU sets is a quantity of PDU sets that have been sent by the second UE; or

PC5 protocol data unit set integrated handling information (PC5 PDU Set Integrated Handling Information, PC5-PSIHI), used to set whether the first UE needs all PDUs in a PDU set to perform subsequent handling, where the subsequent handling includes decoding or direct using.

According to any one of the second aspect or the implementations of the second aspect, the method further includes:
sending first indication information to a first network device, where the first indication information is second information sent by the second UE; and
determining, by the first network device based on the first indication information, that the second UE provides the first UE with a function of supporting a connection to the data network.

According to any one of the second aspect or the implementations of the second aspect, before receiving a second data packet during downlink transmission, the method includes: obtaining the first parameter from the second core network device.

According to any one of the second aspect or the implementations of the second aspect, after receiving a second data packet during downlink transmission, the method includes: obtaining the first parameter from the second core network device.

According to any one of the second aspect or the implementations of the second aspect, the first parameter includes at least one of the following:
a first preset delay, where a transmission delay of any protocol data unit set PDU set on the first link needs to be less than or equal to the first preset delay;
a first preset error rate, where a first ratio needs to be less than or equal to the first preset error rate, the first ratio is a ratio of a quantity of first PDU sets to a quantity of second PDU sets, the quantity of first PDU sets is a quantity of PDU sets that have been sent by the second UE but have not been successfully received by the first UE, and the quantity of second PDU sets is a quantity of PDU sets that have been sent by the second UE; or
a minimum ratio of any PDU set that needs to be correctly transmitted.

According to any one of the second aspect or the implementations of the second aspect, first PDU set information includes: An SMF indicates a RAN to add the first PDU set information to the second data packet during downlink transmission and that is sent to the second UE.

According to any one of the second aspect or the implementations of the second aspect, that the first PDU set information is obtained based on the third data includes: The first PDU set information is obtained from the third data, and the third data includes the first PDU set information; or
the first PDU set information is derived based on the third data.

In this way, in a scenario in which the first UE communicates with the data network via a relay of the second UE, two possible implementations of directly obtaining the first PDU set information and indirectly obtaining (deriving) the first parameter can be provided.

According to any one of the second aspect or the implementations of the second aspect, second PDU set information includes: An SMF indicates a RAN to add the second PDU set information to the second data packet during downlink transmission and that is sent to the second UE.

According to any one of the second aspect or the implementations of the second aspect, that the second PDU set information is obtained based on the fourth data includes: The second PDU set information is obtained from the fourth data, and the fourth data includes the second PDU set information; or
the second PDU set information is derived based on the fourth data.

According to any one of the second aspect or the implementations of the second aspect, that the second handling is associated with the first parameter, the first PDU set information, and the second PDU set information includes: The second handling is associated with the first parameter, a first link state, the first PDU set information, and the second PDU set information, where the first link state indicates a state of the first link.

According to any one of the second aspect or the implementations of the second aspect, that the second handling is determined based on the first parameter includes: The second handling is determined based on the first parameter, the first PDU set information, and the second PDU set information.

According to any one of the second aspect or the implementations of the second aspect, that the second handling is determined based on the first parameter, the first PDU set information, and the second PDU set information includes: The second handling is determined based on the first parameter, the first link state, the first PDU set information, and the second PDU set information, where the first link state indicates the state of the first link.

According to any one of the second aspect or the implementations of the second aspect,
when the first link state indicates that the first link is congested, and the first PDU set is more important than the second PDU set, the second handling is sending the first PDU set and discarding the second PDU set on the first link.

That the first PDU set is more important than the second PDU set is determined based on the first PDU set information and the second PDU set information.

In this way, in a scenario in which the first UE communicates with the data network via a relay of the second UE, when a data transmission rate of the first link is not high, transmission of data with high importance can be ensured, thereby ensuring user experience.

According to any one of the second aspect or the implementations of the second aspect, the first link state is sensed by the second UE.

According to any one of the second aspect or the implementations of the second aspect,
when the first link state indicates that the first link is congested, the first PDU set is important, and the second PDU set is unimportant, the second handling is sending the first PDU set and discarding the second PDU set on the first link.

That the first PDU set is important is determined based on the first PDU set information, and that the second PDU set is unimportant is determined based on the second PDU set information.

According to any one of the second aspect or the implementations of the second aspect,
when the first link state indicates that the first link is non-congested, and the first PDU set is more important than the second PDU set, the second handling is sending the first PDU set and the second PDU set on the first link.

That the first PDU set is more important than the second PDU set is determined based on the first PDU set information and the second PDU set information.

In this way, in a scenario in which the first UE communicates with the data network via a relay of the second UE, when a data transmission rate of the first link is high, transmission of both data with high importance and data with low importance can be ensured, thereby ensuring user experience.

According to any one of the second aspect or the implementations of the second aspect,
when the first link state indicates that the first link is non-congested, the first PDU set is important, and the second PDU set is unimportant, the second handling is sending the first PDU set and the second PDU set on the first link.

That the first PDU set is important is determined based on the first PDU set information, and that the second PDU set is unimportant is determined based on the second PDU set information.

According to any one of the second aspect or the implementations of the second aspect,
when the first link state indicates that the first link is congested, and the first PDU set is more important than the second PDU set, the second handling is sending the first PDU set and discarding the second PDU set on the first link.

That the first PDU set is more important than the second PDU set is determined based on the first PDU set information and the second PDU set information.

According to any one of the second aspect or the implementations of the second aspect,
when the first link state indicates that the first link is congested, the first PDU set is important, and the second PDU set is unimportant, the second handling is sending the first PDU set and discarding the second PDU set on the first link.

That the first PDU set is important is determined based on the first PDU set information, and that the second PDU set is unimportant is determined based on the second PDU set information.

According to any one of the second aspect or the implementations of the second aspect,
when the first link state indicates that the first link is congested, and the first PDU set is prior to the second PDU set, the second handling is sending the first PDU set and discarding the second PDU set on the first link.

That the first PDU set is prior to the second PDU set is obtained based on the first PDU set information and the second PDU set information.

In this way, in a scenario in which the first UE communicates with the data network via a relay of the second UE, when a data transmission rate of the first link is not high, transmission of data with a high priority can be ensured, thereby ensuring user experience.

According to any one of the second aspect or the implementations of the second aspect,
when the first link state indicates that the first link is congested, the first PDU set is preferred, and the second PDU set is not preferred, the second handling is sending the first PDU set and discarding the second PDU set on the first link.

That the first PDU set is preferred is obtained based on the first PDU set information, and that the second PDU set is not preferred is obtained based on the second PDU set information.

According to any one of the second aspect or the implementations of the second aspect, before receiving the second data packet during downlink transmission, the method includes:
determining a first rule, where the first rule is: if downlink data is received, determining PDU set information corresponding to a PDU set in the downlink data.

According to any one of the second aspect or the implementations of the second aspect,
when a transmission delay of the first PDU set on the first link is less than or equal to a first preset delay, transmission of the first PDU set continues to be performed; or
when a transmission delay of the second PDU set on the first link is greater than a first preset delay, the second PDU set is discarded.

According to any one of the second aspect or the implementations of the second aspect, before receiving the second data packet during downlink transmission, and before determining the first rule, the method includes:
receiving a second message, where the second message includes a first identifier, the second message is a message received and forwarded by the RAN through a second interface, the second message indicates to establish a first quality of service flow QoS flow, and the first identifier indicates the first QoS flow.

According to any one of the second aspect or the implementations of the second aspect, both the first PDU set and the second PDU set are included in data transmitted by using the first QoS flow and that is in first downlink data, and the first downlink data is from an AF in an application server.

According to any one of the second aspect or the implementations of the second aspect, the second message includes a first parameter, the first parameter includes a first PDU set quality of service QoS parameter, and the first PDU set QoS parameter indicates a requirement that needs to be met when data transmitted by using the first QoS flow is transmitted on the first link.

According to any one of the second aspect or the implementations of the second aspect, the second message includes a second parameter, the second parameter includes a second PDU set quality of service QoS parameter, the second PDU set QoS parameter indicates a requirement that needs to be met when data transmitted by using the first QoS flow is transmitted on the second link, and a first PDU set QoS parameter indicates a requirement that needs to be met when the data transmitted by using the first QoS flow is transmitted on the first link.

According to any one of the second aspect or the implementations of the second aspect,
the second parameter includes a first mapping relationship, and the first mapping relationship is a mapping relationship between the first PDU set QoS parameter and the second PDU set QoS parameter; and
after receiving the second message, the method includes: obtaining the first PDU set QoS parameter based on the second PDU set QoS parameter and the first mapping relationship, where the first PDU set quality of service QoS parameter is included in the first parameter, and the first parameter indicates the requirement of the first link.

According to any one of the second aspect or the implementations of the second aspect, before receiving the second message, the method includes: The second UE learns of a first mapping relationship, where the first mapping relationship is a mapping relationship between the first PDU set QoS parameter and the second PDU set QoS parameter.

The first PDU set QoS parameter indicates a requirement that needs to be met when data transmitted by using the first QoS flow is transmitted on the first link, and the second PDU set QoS parameter indicates a requirement that needs to be met when the data transmitted by using the first QoS flow is transmitted on the second link.

According to any one of the second aspect or the implementations of the second aspect, after receiving the second message, the method includes:
obtaining the first PDU set QoS parameter based on the second PDU set QoS parameter and the first mapping relationship, where the first PDU set quality of service QoS parameter is included in the first parameter.

According to any one of the second aspect or the implementations of the second aspect, the second interface is an N1 interface, the second handling indicates second QoS handling, the second QoS handling is associated with the first QoS flow, the second core network device is an access and mobility management function entity AMF, the second UE is a relay user equipment relay UE, and the first UE is a remote user equipment remote UE.

According to any one of the second aspect or the implementations of the second aspect, the first link is a link established based on a PC5 interface, and the second link is a link established based on a Uu interface.

According to a third aspect, a communication method is provided. The method is applied to a first user equipment UE, the first UE communicates with a second UE, and the first UE communicates with a data network via the second UE. The method includes:
before performing uplink transmission of a first data packet to the second UE, determining first data and second data from the first data packet; and
sending at least one of the first data or the second data to the second UE based on first handling, where the first handling is associated with a first link state and a second link state.

The first link state indicates a state of a first link, the second link state indicates a state of a second link, the first link is a communication link between the first UE and the second UE, and the second link is a communication link between the second UE and a RAN.

In this way, in a scenario in which the first UE communicates with the data network via a relay of the second UE, before the first UE transmits uplink data to the second UE, link states of different links involved in subsequent transmission are comprehensively considered, thereby optimizing transmission.

According to the third aspect, the first data includes a first protocol data unit set PDU set and first PDU set information, the second data includes a second PDU set and second PDU set information, the first PDU set information indicates a feature of the first PDU set, and the second PDU set information indicates a feature of the second PDU set.

In this way, a PDU set is introduced to the first link on which the first UE transmits data to the second UE, to facilitate data control or management during overall data transmission, and ensure user experience.

According to any one of the third aspect or the implementations of the third aspect, based on the first link state and the second link state includes: based on the first link state, the second link state, the first PDU set information, and the second PDU set information.

In this way, a PDU set is introduced to the first link on which the first UE transmits data to the second UE, to facilitate data control or management during overall data transmission, and ensure user experience.

According to any one of the third aspect or the implementations of the third aspect, the method includes:
when the second link state indicates a first state, the first handling indicates a first handling manner; or
when the second link state indicates a second state, the first handling indicates a second handling manner.

The first state is different from the second state, and the first handling manner is different from the second handling manner.

In this way, in a scenario in which the first UE communicates with the data network via a relay of the second UE, dynamic adjustment can be performed based on the first link state and the second link state, thereby optimizing transmission.

According to any one of the third aspect or the implementations of the third aspect, the method includes:
when the first link state indicates the first state, the first state is congested, and the first PDU set is more important than the second PDU set, the first handling manner is sending the first PDU set and discarding the second PDU set on the first link.

That the first PDU set is more important than the second PDU set is determined based on the first PDU set information and the second PDU set information.

In this way, in a scenario in which the first UE communicates with the data network via a relay of the second UE, when the first UE transmits uplink data to the second UE, transmission of data with high importance can be ensured, thereby ensuring user experience.

According to any one of the third aspect or the implementations of the third aspect,
when the first link state indicates the first state, the first state is congested, the first PDU set is important, and the second PDU set is unimportant, the first handling manner is sending the first PDU set and discarding the second PDU set on the first link.

That the first PDU set is important and the second PDU set is unimportant is determined based on the first PDU set information and the second PDU set information.

According to any one of the third aspect or the implementations of the third aspect,
when the first link state indicates the second state, the second state is non-congested, the first PDU set is important, and the second PDU set is unimportant, the first handling manner is sending the first PDU set and the second PDU set on the first link.

That the first PDU set is important and the second PDU set is unimportant is determined based on the first PDU set information and the second PDU set information.

According to any one of the third aspect or the implementations of the third aspect,
the first UE is a remote user equipment remote UE, and the second UE is a relay user equipment relay UE; or
the second UE is a hotspot UE, and a hotspot is a Wi-Fi hotspot.

According to a fourth aspect, a communication method is provided. The method is applied to a communication system. The communication system includes an access network device RAN and a second user equipment UE, the RAN communicates with the second UE, the second UE communicates with a first UE, and the first UE communicates with a data network via the second UE. The method includes:
in response to receiving a first data packet during downlink transmission, obtaining, by the RAN, first data, second data, and third data from the first data packet;
sending, by the RAN, a second data packet to the second UE based on first handling, where the second data packet includes the first data and the second data, and the first handling is associated with a first link state and a second link state;
in response to receiving the second data packet, obtaining, by the second UE, fourth data and fifth data from the second data packet, where both the fourth data and the first data include same first content, and both the fifth data and the second data include same second content; and
sending at least one of the fourth data or the fifth data to the first UE based on second handling, where the second handling is associated with a first parameter.

The first link state indicates a state of a first link, the second link state indicates a state of a second link, the first link is a communication link between the first UE and the second UE, the second link is a communication link between the second UE and the RAN, and the first parameter indicates a requirement that needs to be met when data transmission is performed on the first link.

According to the fourth aspect, before sending the second data packet to the second UE based on the first handling,
determining the first handling of the first data and the second data during transmission on the second link, where the first handling is determined based on the first link state and the second link state.

According to any one of the fourth aspect or the implementations of the fourth aspect,
when the first link state indicates a first state, the first handling indicates a first handling manner; or
when the first link state indicates a second state, the first handling indicates a second handling manner.

The first state is different from the second state, and the first handling manner is different from the second handling manner.

According to any one of the fourth aspect or the implementations of the fourth aspect, before sending the at least one of the fourth data or the fifth data to the first UE based on the second handling,
determining the second handling of the fourth data and the fifth data during transmission on the first link, where the second handling is determined based on the first parameter.

According to any one of the fourth aspect or the implementations of the fourth aspect, the first data includes a first protocol data unit set PDU set, the second data includes a second PDU set, the third data includes a third PDU set, the fourth data includes the first PDU set, the fifth data includes the second PDU set, the first content includes the first PDU set, and the second content includes the second PDU set.

According to any one of the fourth aspect or the implementations of the fourth aspect, that the second handling is associated with the first parameter includes: The second handling is associated with the first parameter, first PDU set information, and second PDU set information.

The first PDU set information indicates a feature of the first PDU set, the second PDU set information indicates a feature of the second PDU set, the first PDU set information is obtained based on the fourth data, and the second PDU set information is obtained based on the fifth data.

According to any one of the fourth aspect or the implementations of the fourth aspect,
the first parameter is obtained by the second UE from a second core network device; or
the first parameter is obtained by the second UE based on a second parameter, and the second parameter is obtained by the second UE from a second core network device.

According to any one of the fourth aspect or the implementations of the fourth aspect, the first parameter includes at least one of the following:
a first preset delay, where a transmission delay of any protocol data unit set PDU set on the first link needs to be less than or equal to the first preset delay;
a first preset error rate, where a first ratio needs to be less than or equal to the first preset error rate, the first ratio is a ratio of a quantity of first PDU sets to a quantity of second PDU sets, the quantity of first PDU sets is a quantity of PDU sets that have been sent by the second UE but have not been successfully received by the first UE, and the quantity of second PDU sets is a quantity of PDU sets that have been sent by the second UE; or
a minimum ratio of any PDU set that needs to be correctly transmitted.

According to any one of the fourth aspect or the implementations of the fourth aspect, before receiving the first data packet during downlink transmission, the method includes:
receiving first information and a first identifier, where the first identifier indicates a first quality of service flow QoS flow; and
in response to receiving the first information and the first identifier, determining, by the RAN, handling of downlink data during transmission on the second link based on the first link state and the second link state when determining that the downlink data is received;
in response to receiving the first information and the first identifier, the first information indicates that the RAN determines handling of downlink data during transmission on the second link based on the first link state and the second link state when determining that the downlink data is received by using the first QoS flow; or
in response to receiving the first information and the first identifier, the first information indicates that downlink data received by the RAN by using the first QoS flow is relay data, and the relay data is data to be transmitted by the second UE to the first UE.

According to any one of the fourth aspect or the implementations of the fourth aspect, that the second handling is determined based on the first parameter includes: The second handling is determined based on the first parameter, the first PDU set information, and the second PDU set information.

According to any one of the fourth aspect or the implementations of the fourth aspect, based on the first parameter, the first PDU set information, and the second PDU set information includes: based on the first parameter, the first link state, the first PDU set information, and the second PDU set information, where the first link state indicates a state of the first link.

According to any one of the fourth aspect or the implementations of the fourth aspect, a first interface is an N2 interface, a second interface is an N1 interface, the first handling indicates first QoS handling, the second handling indicates second QoS handling, the first QoS handling is associated with the first QoS flow, and the second QoS handling is associated with the first QoS flow.

According to any one of the fourth aspect or the implementations of the fourth aspect, the first link is a link established based on a PC5 interface, and the second link is a link established based on a Uu interface.

For technical effects corresponding to any one of the fourth aspect or the implementations of the fourth aspect, refer to technical effects corresponding to any one of the first aspect or the implementations of the first aspect and technical effects corresponding to any one of the second aspect or the implementations of the second aspect. Details are not described herein again.

According to a fifth aspect, an access network device is provided, and is referred to as a RAN herein. The RAN communicates with a second user equipment UE, the second UE communicates with a first UE, and the first UE communicates with a data network via the second UE. The RAN includes:
a processor; and
a memory coupled to the processor, where the memory stores computer instructions, and when the computer instructions are run by the processor, the RAN is enabled to perform the method according to any one of the first aspect or the implementations of the first aspect.

For technical effects corresponding to any one of the fifth aspect or the implementations of the fifth aspect, refer to technical effects corresponding to any one of the first aspect or the implementations of the first aspect. Details are not described herein again.

According to a sixth aspect, a second user equipment UE is provided. The second UE communicates with a first UE, and the first UE communicates with a data network via the second UE. The second UE includes:
a processor; and
a memory coupled to the processor, where the memory stores computer instructions, and when the computer instructions are run by the processor, the second UE is enabled to perform the method according to any one of the second aspect or the implementations of the second aspect.

For technical effects corresponding to any one of the sixth aspect or the implementations of the sixth aspect, refer to technical effects corresponding to any one of the second aspect or the implementations of the second aspect. Details are not described herein again.

According to a seventh aspect, a first user equipment UE is provided. The first UE communicates with a second UE, and the first UE communicates with a data network via the second UE. The first UE includes:
a processor; and
a memory coupled to the processor, where the memory stores computer instructions, and when the computer instructions are run by the processor, the first UE is enabled to perform the method according to any one of the third aspect or the implementations of the third aspect.

For technical effects corresponding to any one of the seventh aspect or the implementations of the seventh aspect, refer to technical effects corresponding to any one of the third aspect or the implementations of the third aspect. Details are not described herein again.

According to an eighth aspect, a communication system is provided. The communication system includes an access network device RAN and a second user equipment UE, the RAN communicates with the second UE, the second UE communicates with a first UE, and the first UE communicates with a data network via the second UE.

The RAN is configured to perform the method according to any one of the first aspect or the implementations of the first aspect.

The second UE is configured to perform the method according to any one of the second aspect or the implementations of the second aspect.

For technical effects corresponding to any one of the eighth aspect or the implementations of the eighth aspect, refer to technical effects corresponding to any one of the first aspect or the implementations of the first aspect and technical effects corresponding to any one of the second aspect or the implementations of the second aspect. Details are not described herein again.

According to a ninth aspect, a chip is provided. The chip includes a processor and a memory coupled to the processor, the memory stores a computer program, and when the processor executes the computer program, the method according to any one of the first aspect or the implementations of the first aspect is performed.

For technical effects corresponding to any one of the ninth aspect or the implementations of the ninth aspect, refer to technical effects corresponding to any one of the first aspect or the implementations of the first aspect. Details are not described herein again.

According to a tenth aspect, a chip is provided. The chip includes a processor and a memory coupled to the processor, the memory stores a computer program, and when the processor executes the computer program, the method according to any one of the second aspect or the implementations of the second aspect is performed.

For technical effects corresponding to any one of the tenth aspect or the implementations of the tenth aspect, refer to technical effects corresponding to any one of the second aspect or the implementations of the second aspect. Details are not described herein again.

According to an eleventh aspect, a chip is provided. The chip includes a processor and a memory coupled to the processor, the memory stores a computer program, and when the processor executes the computer program, the method according to any one of the third aspect or the implementations of the third aspect is performed.

For technical effects corresponding to any one of the eleventh aspect or the implementations of the eleventh aspect, refer to technical effects corresponding to any one of the third aspect or the implementations of the third aspect. Details are not described herein again.

According to a twelfth aspect, a computer program product is provided. When the computer program product runs, the method according to any one of the first aspect or the implementations of the first aspect is performed.

For technical effects corresponding to any one of the twelfth aspect or the implementations of the twelfth aspect, refer to technical effects corresponding to any one of the first aspect or the implementations of the first aspect. Details are not described herein again.

According to a thirteenth aspect, a computer program product is provided. When the computer program product runs, the method according to any one of the second aspect or the implementations of the second aspect is performed.

For technical effects corresponding to any one of the thirteenth aspect or the implementations of the thirteenth aspect, refer to technical effects corresponding to any one of the second aspect or the implementations of the second aspect. Details are not described herein again.

According to a fourteenth aspect, a computer program product is provided. When the computer program product runs on a first user equipment UE, the first UE is enabled to perform the method according to any one of the third aspect or the implementations of the third aspect.

For technical effects corresponding to any one of the fourteenth aspect or the implementations of the fourteenth aspect, refer to technical effects corresponding to any one of the third aspect or the implementations of the third aspect. Details are not described herein again.

It can be learned from the foregoing descriptions that, in the technical solutions of this application, in a scenario in which the first UE communicates with the data network via a relay of the second UE, after link states of different links involved in subsequent transmission are comprehensively considered, transmission of the first link data or transmission of the second link data can be performed, thereby alleviating impact of data congestion on data transmission, and optimizing transmission.

Optionally, in the technical solutions of this application, in the scenario in which the first UE communicates with the data network via the relay of the second UE, link states (for example, the first link state and the second link state) of different links involved in subsequent transmission can be comprehensively considered, and dynamic adjustment can be performed based on the first link state and the second link state, thereby optimizing transmission.

For example, based on the first link state and the second link state, when an overall data transmission rate is low, during transmission of the first link data or transmission of the second link data, transmission of data with high importance (where the high importance may also be replaced with a high priority) is ensured, and data with low importance (where the low importance may also be replaced with a low priority) is discarded. When an overall data transmission rate is high, during transmission of the first link data or transmission of the second link data, transmission of both data with high importance and data with low importance are ensured; or transmission of data with high importance and transmission of a specific proportion of data with low importance are ensured.

Optionally, in the technical solutions of this application, in the scenario in which the first UE communicates with the data network via the relay of the second UE, when an overall data transmission rate is not high, an overall delay is high, or the like, transmission of data with high importance or a high priority can be ensured, to alleviate adverse impact on data transmission when a link is in an adverse case, and enhance data transmission in a timely manner when a link is in a favorable case, thereby fully utilizing a link case, optimizing data transmission, and ensuring user experience.

Optionally, in the technical solutions of this application, in the scenario in which the first UE communicates with the data network via the relay of the second UE, during downlink transmission, before transmission of the second link data, the first link state and the second link state can be considered, to adjust transmission of the second link data (for example, adjust data during transmission of the second link data), and ensure transmission of data with high importance or a high priority at a proper occasion, thereby ensuring user experience.

Optionally, in the technical solutions of this application, in the scenario in which the first UE communicates with the data network via the relay of the second UE, during uplink transmission, before transmission of the first link data, the first link state and the second link state can be considered, to adjust transmission of the first link data (for example, adjust data during transmission of the first link data), and ensure transmission of data with high importance or a high priority at a proper occasion, thereby ensuring user experience.

Optionally, in the technical solutions of this application, in the scenario in which the first UE communicates with the data network via the relay of the second UE, during downlink transmission, after transmission of the second link data and before transmission of the first link data, the first link state or the first parameter can be considered, to adjust transmission of the first link data (for example, adjust data during transmission of the first link data), and ensure transmission of data with high importance or a high priority at a proper occasion, thereby ensuring user experience.

Optionally, in the technical solutions of this application, in the scenario in which the first UE communicates with the data network via the relay of the second UE, data control or management during overall data transmission is considered for data control or management during transmission of the first link data, to facilitate data control or management during transmission of the first link data, improve efficiency, and ensure user experience, so that data control or management is more convenient during data transmission.

Correspondingly, the technical solutions of this application can achieve technical effects obtained by combining any two or more of the foregoing technical effects in the scenario in which the first UE communicates with the data network via the relay of the second UE.

### BRIEF DESCRIPTION OF DRAWINGS

To describe the technical solutions in the conventional technology and embodiments of this application more clearly, the following briefly describes the accompanying drawings required in the conventional technology and embodiments of this application. It is clear that the accompanying drawings in the following descriptions relate to some embodiments of this application, and a person of ordinary skill in the art may still derive other drawings from these accompanying drawings without creative efforts.
FIG. 1 is a diagram of a scenario to which this application is applied;
FIG. 2 is a diagram of an architecture of a communication system to which this application is applied;
FIG. 3 is a diagram of a network architecture of a layer 3 relay L3 relay to which this application is applied;
FIG. 4 is a diagram of a network architecture of a layer 2 relay L2 relay to which this application is applied;
FIG. 5 is a diagram of a first preceding procedure according to Embodiment 1 of this application;
FIG. 6 is a diagram of a first signaling procedure according to Embodiment 1 of this application;
FIG. 7 is a diagram of a data transmission procedure according to Embodiment 1 of this application;
FIG. 8 is a diagram of a second signaling procedure according to Embodiment 1 of this application;
FIG. 9 is a diagram of a second preceding procedure according to Embodiment 1 of this application;
FIG. 10 is a diagram of a third signaling procedure according to Embodiment 1 of this application;
FIG. 11 is a diagram of a first preceding procedure according to Embodiment 2 of this application;
FIG. 12 is a diagram of a first signaling procedure according to Embodiment 2 of this application;
FIG. 13 is a diagram of a data transmission procedure according to Embodiment 2 of this application;
FIG. 14 is a diagram of an enhanced SDAP used by a RAN to transfer PDU set information to a second UE according to Embodiment 2 of this application;
FIG. 15 is a diagram of a newly added protocol layer used by a RAN to transfer PDU set information to a second UE according to Embodiment 2 of this application;
FIG. 16 is a diagram of a newly added protocol layer used by a RAN to transfer PDU set information to a second UE according to Embodiment 2 of this application;
FIG. 17 is a diagram of a second preceding procedure according to Embodiment 2 of this application;
FIG. 18A to FIG. 18C are a diagram of a second signaling procedure according to Embodiment 2 of this application;
FIG. 19A to FIG. 19C are a diagram of a signaling procedure according to Embodiment 3 of this application;
FIG. 20 is a diagram of a data transmission procedure according to Embodiment 3 of this application;
FIG. 21A to FIG. 21C are a diagram of a second signaling procedure according to Embodiment 3 of this application;
FIG. 22A to FIG. 22C are a diagram of a third signaling procedure according to Embodiment 3 of this application;
FIG. 23 is an implementation diagram of an uplink data procedure initiated by a first UE according to Embodiment 3 of this application;
FIG. 24 is an implementation diagram of a procedure after uplink data reaches a second UE according to Embodiment 3 of this application; and
FIG. 25 is a diagram of a structure of a communication apparatus according to an embodiment of this application.

### DESCRIPTION OF EMBODIMENTS

The following further provides detailed descriptions with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough understanding of this application. It should be understood that the accompanying drawings and embodiments of this application are merely used as examples, but are not intended to limit the scope of this application. All other embodiments obtained by a person of ordinary skill in the art based on embodiments of this application without creative efforts shall fall within the scope of this application.

In this application, "at least one" means one or more, and "a plurality of" means at least two (including two). The term "or" describes an association relationship between associated objects and indicates that three relationships may exist. For example, A or B may indicate the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c indicates at least one of seven combinations: a; b; c; a and b; a and c; b and c; or a, b, and c, where a, b, and c may be singular or plural.

Ordinal numbers such as "first" and "second" in this application are intended to distinguish between a plurality of objects, and are not intended to limit sizes, content, a sequence, a time sequence, priorities, importance, or the like of the plurality of objects. In addition, unless otherwise specified, step numbers in embodiments described in this application are merely used to distinguish between different steps, but are not used to limit a sequence of the steps. An execution sequence of the steps should be determined based on functions and internal logic of the steps.

Embodiments of this application may be implemented according to any appropriate communication protocol, including but not limited to cellular communication protocols such as 3rd generation (3rd Generation, 3G), 4th generation (4G), 5th generation (5G), and 6th generation (6G) cellular communication protocols, a wireless local area network communication protocol such as the institute of electrical and electronics engineers (Institute of Electrical and Electronics Engineers, IEEE) 802.11, or any other protocol currently known or developed in the future.

Technical solutions in embodiments of this application are applied to a communication system that complies with any proper communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, or a future evolved 6th generation communication system.

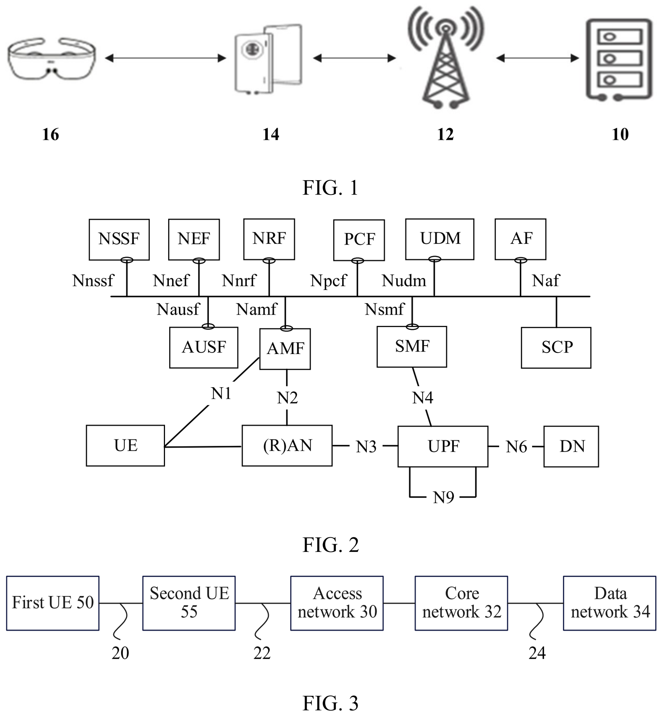

For example, FIG. 1 is a diagram of an application scenario of this application. As shown in FIG. 1, a wearable device 16, for example, a watch, a band, AR glasses, or VR glasses, is used as a remote device (collectively referred to as a first UE below), and accesses a base station 12 through a radio link between the wearable device 16 and a relay device (collectively referred to as a second UE below), for example, a smartphone 14 or a CPE, to implement data transmission between the first UE and an application server.

For example, FIG. 2 is a diagram of an architecture of a communication system to which this application is applied. In FIG. 2, a 5G network architecture is used as an example for description. It should be noted that an architecture of another communication system is also applicable to this application. The following describes data sets and functions of network elements in the communication system in FIG. 2.

A radio access network (radio access network, RAN) network element includes a plurality of RAN nodes, and implements a radio physical layer function, resource scheduling and radio resource management, radio access control, and a mobility management function. A 5G RAN is connected to a user plane function (user plane function, UPF) network element through a user plane interface N3, to transfer data of a UE. The RAN establishes a control plane signaling connection to an access and mobility management function (Access and Mobility Management Function, AMF) network element of a core network through a control plane interface N2, to implement a function such as radio access bearer control. The RAN may also be referred to as a radio access network device.

The AMF network element is mainly responsible for functions such as UE authentication, UE mobility management, network slice selection, and selection of a session management function (Session Management Function, SMF) network element. The AMF network element serves as an anchor for connecting N1 signaling and N2 signaling, routes N1 and N2 session management (Session Management, SM) messages to the SMF network element, and maintains and manages state information of the UE.

The SMF network element is connected to the AMF network element through an interface N11, and is mainly responsible for all control plane functions in UE session management, including selection of a user plane function (User Plane Function, UPF) network element, network protocol (Internet Protocol, IP) address allocation, quality of service (Quality of Service, QoS) attribute management of a session, and obtaining a policy control and charging (Policy Control and Charging, PCC) rule from a policy control function (Policy Control Function, PCF) network element.

The PCF network element is connected to the SMF network element through an interface N7, and connected to the AMF network element through an interface N15. The PCF network element is configured to generate and store a PCC rule related to session management and provide the PCC rule for the SMF network element, and is further configured to generate policy information related to mobility management and provide the policy information for the AMF network element.

The UPF network element is connected to the SMF network element through an interface N4. The UPF network element serves as a session connection anchor of a protocol data unit (Protocol Data Unit, PDU), and is responsible for data packet filtering, data transmission or forwarding, rate control, and charging information generation that are for the UE.

An NEF network element is a network capability exposure function entity, and is responsible for providing a network capability externally in 3GPP, including: a (Monitoring capability) monitoring function, used to monitor a specific event of the UE in a 5G system; a (Provisioning capability) provisioning capability, used to allow an external party to provide information that can be used for the UE in the 5G system; a (Policy/Charging capability) policy/charging capability, used to handle QoS and a charging policy for the UE based on a request of the external party; and an (Analytics reporting capability) analytics reporting function, used to allow the external party to obtain or subscribe to/unsubscribe from analytics information generated by the 5G system.

It should be understood that, all the network elements shown in FIG. 2 may be independent of each other, or two or more network elements may be integrated together. This is not specifically limited in embodiments of this application.

A terminal, also referred to as a UE, may include a mobile phone, a tablet, a CPE, a computer, a vehicle-mounted device, or a terminal device having a function similar to radio access.

Packet data unit set (PDU set): The PDU set includes one or more PDUs, and carries a payload (for example, a frame(s) or a video slice(s) used for an extended reality (XR) service) of an information unit generated by an application layer.

The following describes several relay network architectures. For example, FIG. 3 shows a layer 3 relay (Layer 3 Relay, L3 Relay) network architecture. As shown in FIG. 3, a first UE 50 establishes a link connection 20 only to a second UE 55, and obtains a service of a data network 34 through connections between the second UE 55, an access network 30, and a core network 32. For a layer 3 relay network, the link connection 20 includes a proximity service communication (Proximity Service Communication 5, PC5) interface between UEs, and a PC5 link is a direct communication link, so that the L3 relay network architecture is formed. In the following, a link refers to an interaction channel including a connection, a network, or the like between two devices, and an interface refers to a logical concept used for communication between a device and another network element. Interface interaction between two devices forms a link. In addition, the network connection 20 may include a non-3GPP network such as Wi-Fi, so that a hotspot relay network architecture is formed. In the L3 relay network architecture and the hotspot relay network architecture, the access network 30 and the core network 32 serve the second UE 55, and there is no access network or core network that serves the first UE 50 (the first UE 50 has no access network or core network in the architectures). The first UE 50 performs transmission with a network only via the second UE 55 and the access network 30 or the core network 32 that serves the second UE 55. In the architectures, because the access network 30 and the core network 32 serve the second UE 55, neither the access network 30 nor the core network 32 senses existence of the first UE 50.

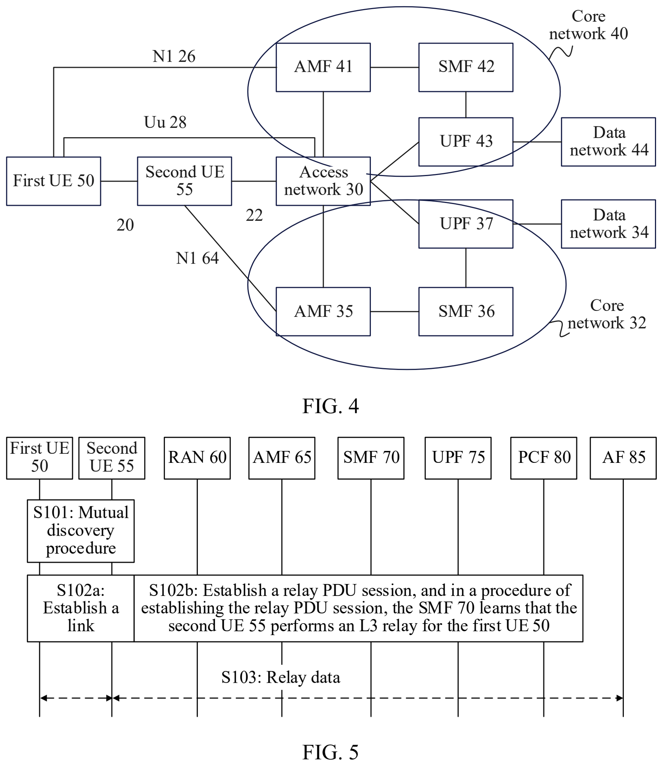

For example, FIG. 4 shows a layer 2 relay (Layer 2 Relay, L2 Relay) network architecture. As shown in FIG. 4, the architecture includes a core network 32 and a core network 40, where the core network 32 serves a second UE 55, and the core network 40 serves a first UE 50. The first UE 50 communicates with an access network 30 and the core network 40 via the second UE 55. In this case, a link between the first UE 50 and the access network 30 is a Uu interface link 28, and a link between the first UE 50 and the core network 40 is an N1 interface link 26. That is, in the L2 relay network architecture, the first UE 50 accesses a network via the second UE 55 (the first UE 50 communicates, via the second UE 55, with the access network 30 and the core network 40 that serve the first UE 50). In the architecture, because the first UE 50 has the access network 30 and the core network 40 that serve the first UE 50, both the access network 30 and the core network 40 can sense existence of the first UE 50.

It should be noted that the network architectures described above are merely examples, and another network architecture is also applicable to this application. For ease of description, only the application server, the core network, the access network, the first UE, and the second UE are used as examples for description in this application. It should be noted that a network architecture to which this application is applicable may include more devices.

The following further provides detailed descriptions with reference to specific embodiments and corresponding accompanying drawings. Although some embodiments of this application are shown in the accompanying drawings, it should be understood that this application may be implemented in various forms, and should not be construed as being limited to the described embodiments. Instead, these embodiments are provided for a more thorough understanding of this application.

### Embodiment 1

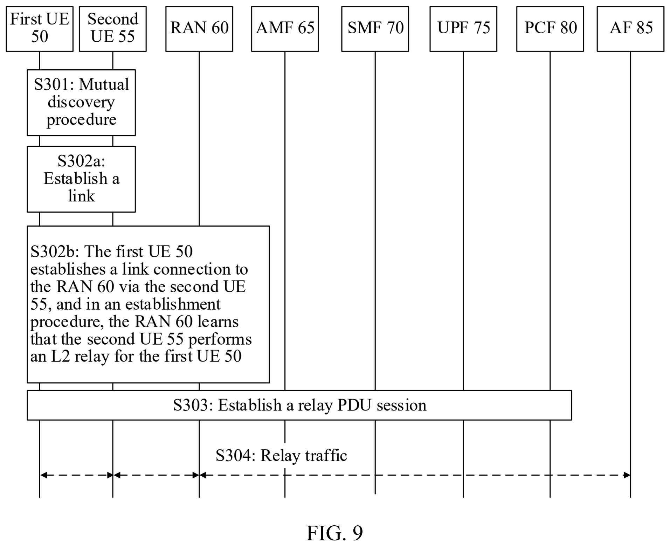

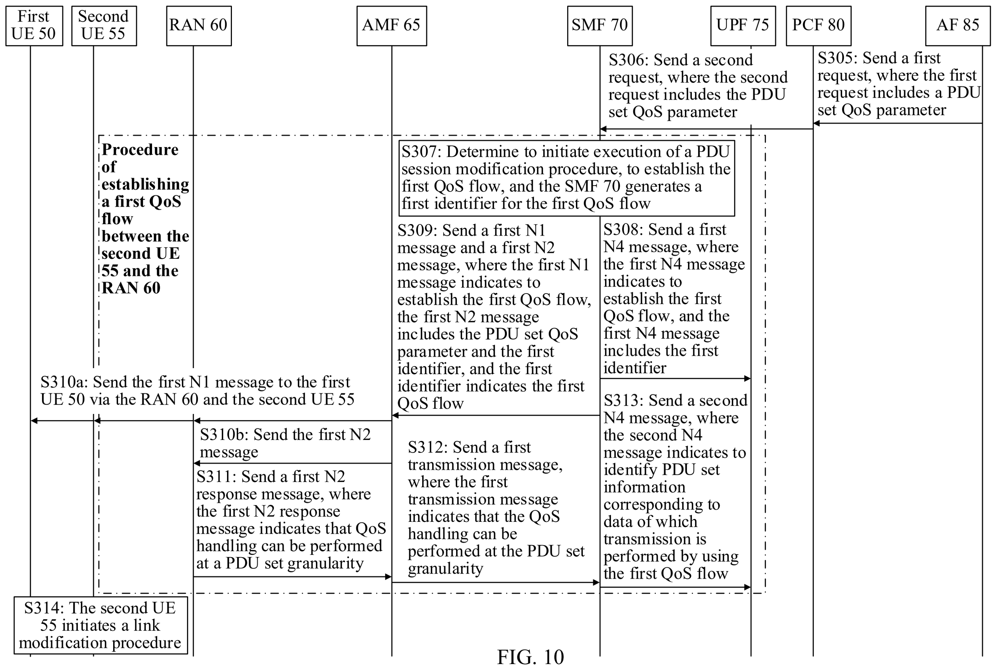

Embodiment 1 relates to two network architectures: an L3 relay and an L2 relay. The L3 relay includes two solutions, and corresponds to FIG. 5 to FIG. 8. The L2 relay includes one solution, and corresponds to FIG. 9 and FIG. 10.

An overall solution of Embodiment 1 is an implementation in which before data transmission, a RAN comprehensively considers link states of different transmission links that are subsequently involved, determines QoS handling, and performs the QoS handling on downlink data.

The following provides specific descriptions. First, a first solution of Embodiment 1 is a solution that belongs to the L3 relay network architecture.

A preceding procedure of the first solution is shown in FIG. 5.

S101: A first UE 50 and a second UE 55 discover each other.

A discovery procedure may have two implementations. A difference lies in that discovery request bodies are different.

In a possible implementation, the discovery procedure is performed in a manner referred to as Model A. In this manner, the second UE 55 broadcasts a discovery announcement message (Announcement message), where the message includes a relay service code (Relay Service Code, RSC), used to announce a relay service identifier that can be provided by the second UE 55; and the first UE 50 performs, based on the discovery announcement message broadcast by the second UE 55 and a requirement of the first UE 50, an action of selecting the second UE 55. For example, if the first UE 50 finds that the RSC broadcast by the second UE 55 matches an RSC that has a relay requirement and that is of the first UE 50, the first UE 50 initiates connection establishment to the second UE 55, to perform a relay service.

In a possible implementation, the discovery procedure is performed in a manner referred to as Model B. In this manner, the first UE 50 broadcasts a discovery solicitation message (Solicitation message), where the message includes a relay service code RSC, used to request a relay service identifier that the first UE 50 expects to be provided. The second UE 55 determines, based on the discovery solicitation message sent by the first UE 50 and a relay capability of the second UE 55, whether to respond to the first UE 50 (to be specific, whether to provide a required relay service for the first UE 50). For example, when a terminal finds that an RSC requested by the first UE 50 matches an RSC of a relay service that can be provided, the terminal sends a discovery response message (Response message) to the first UE 50. If there are a plurality of terminals that send response messages, the first UE 50 selects one of these terminals as the second UE 55, and initiates connection establishment to the terminal, to perform a subsequent relay service.

S102a: The first UE 50 and the selected second UE 55 establish a first link used for direct communication.

S102b: The second UE 55 establishes a relay PDU session, and in a procedure of establishing the relay PDU session, an SMF 70 learns that the second UE 55 performs an L3 relay for the first UE 50.

In a possible implementation, that the second UE 55 initiates, to a network, a PDU session used to perform a relay includes: The second UE 55 sends a PDU session establishment request message to the SMF 70 via an AMF 65; and the SMF 70 sends a PDU session establishment accept message to the second UE 55 after determining to accept a request of the second UE 55.

In a possible implementation, the first UE 50 performs access by using a Wi-Fi hotspot of the second UE 55. In this case, in this step, the second UE 55 indicates, to the SMF 70, that the second UE 55 provides Wi-Fi hotspot access for another UE. Further, alternatively, the second UE 55 indicates that the second UE 55 uses a first PDU session to provide a data relay service for another UE by using the Wi-Fi hotspot. For example, this indication is included in the PDU session establishment request message.

S103: In this case, a relay data transmission condition is met.

The first UE 50 may perform data transmission with the network via the second UE 55.

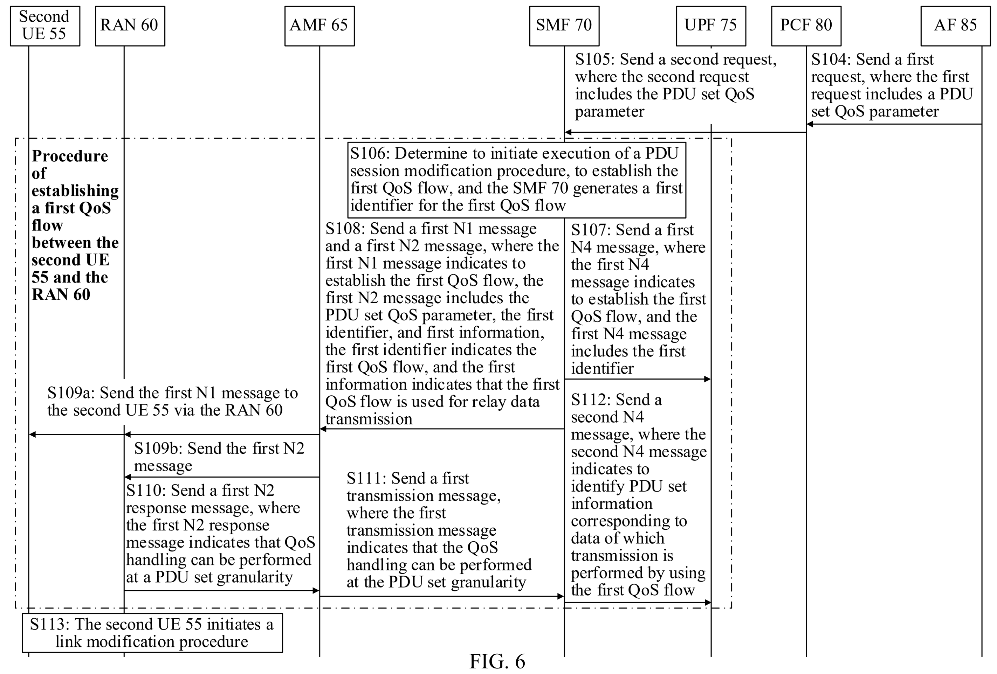

Based on the foregoing preceding procedure, a data transmission condition has been met. However, in this case, only a default QoS parameter can be used to transfer data. To ensure QoS for service data transmission required by a wearable device, a new QoS flow further needs to be added subsequently. The following describes a signaling procedure of the first solution, as shown in FIG. 6.

S104: A server (an AF 85) sends a first request to a policy control network element PCF 80, where the first request includes a PDU set QoS parameter.

The first request further includes description information of a service data flow (Service Data Flow, SDF), and the description information is used to determine data corresponding to the SDF. The description information of the SDF and the PDU set QoS parameter are used to describe the data corresponding to the SDF, and the data needs to meet a QoS requirement indicated by the PDU set QoS parameter herein.

In a possible implementation, the PDU set QoS parameter includes at least one parameter of a PDU set delay budget (PDU Set Delay Budget, PSDB), a PDU set error rate (PDU Set Error Rate, PSER), or PDU set integrated handling information (PDU Set Integrated Handling Information, PSIHI).

In a possible implementation, the first request includes a policy authorization create request message, an AF session create request message (AF session with QoS Create request), or an AF session update request message (AF session with QoS Create update).

In a possible implementation, when the AF 85 can directly interact with the PCF 80, the AF 85 may send a request message to the policy control network element; or when the AF 85 cannot directly interact with the PCF 80, the AF 85 may send a request message to the PCF 80 via a network capability exposure function network element NEF.

S105: The PCF 80 sends a second request to the SMF 70, where the second request includes the PDU set QoS parameter.

The second request further includes the description information of the SDF, and the description information is used to determine the data corresponding to the SDF. The description information of the SDF and the PDU set QoS parameter are used to describe the data corresponding to the SDF, and the data needs to meet the QoS requirement indicated by the PDU set QoS parameter herein.

In a possible implementation, the second request is sent by using a PCF initiated SM policy association modification procedure. The PCF 80 sends an Npcf_SMPolicyControl_UpdateNotify request message to the SMF 70, where the message includes a policy and charging control (Policy and Charging Control, PCC) rule, and the PCC rule includes the PDU set QoS parameter.

In a possible implementation, the second request is sent by using an SM policy association modification establishment procedure. The SMF 70 sends Npcf_SMPolicyControl_Create to the PCF 80, and the PCF 80 returns a response message Npcf_SMPolicyControl_CreateResponse to the SMF 70, where the response message includes a PCC rule, and the PCC rule includes the PDU set QoS parameter.

S106: The SMF 70 determines to initiate execution of a PDU session modification procedure, to establish a first QoS flow, and the SMF 70 generates a first identifier for the first QoS flow.

The first QoS flow is used for transmission of the data corresponding to the SDF, and PDU set-based control is performed on the first QoS flow based on the PDU set QoS parameter.

In a possible implementation, the SMF 70 determines, in response to receiving the second request, to initiate execution of the PDU session modification procedure, to establish the first QoS flow, and the SMF generates the first identifier for the first QoS flow.

In a possible implementation, the SMF 70 determines, in response to receiving the second request, to initiate execution of the PDU session modification procedure, to establish the first QoS flow, where the first QoS flow belongs to the PDU session established in S102. In addition, the SMF generates the first identifier for the first QoS flow. In addition, the SMF 70 determines that the first QoS flow is used for relay data transmission, where relay data is data transmitted between the network and the second UE 55 by using the first QoS flow and that actually belongs to the first UE 50. For example, for downlink, data sent by the network to the second UE 55 by using the first QoS flow is sent by the second UE 55 to the first UE 50 on the first link (that is, relayed to the first UE 50 via the second UE 55). For uplink, the second UE 55 receives data from the first UE 50 on the first link, and the second UE 55 sends the uplink data to a network device by using the first QoS flow (that is, the uplink data is relayed to the network via the second UE 55). In addition, the SMF 70 determines, based on the PDU set QoS parameter included in the second request, a PDU set QoS parameter used by a second link. For example, the PDU set QoS parameter may be a PDU set QoS parameter of a Uu interface link. The PDU set QoS parameter used by the second link is associated with the first QoS flow.

The first identifier is a QoS flow identifier (QoS Flow Identifier, QFI).

S107: The SMF 70 sends a first N4 message to a UPF 75, where the first N4 message indicates to establish the first QoS flow, and the first N4 message includes the first identifier.

In a possible implementation, the first N4 message is an N4 session modification request.

S108: The SMF 70 sends a first N1 message and a first N2 message to the AMF 65, where the first N1 message indicates the second UE 55 to establish the first QoS flow, the first N2 message indicates the RAN 60 to establish the first QoS flow, the first N2 message includes the PDU set QoS parameter of the second link, the first identifier, and first information, and the first identifier indicates the first QoS flow. For example, the first identifier is a QoS flow identifier QFI. The first information indicates that a QoS flow is used for relay data transmission. A combination of the first identifier and the first information indicates that the first QoS flow is used for relay data transmission.

When determining that the first QoS flow is used for relay data transmission, the SMF 70 includes the first information in SM information of the first N2 message. Further, the SMF 70 delivers the first information when determining that at least one of the following is met: The second UE 55 performs an L3 relay function or a Wi-Fi hotspot function, or performs PDU set-based control on the first QoS flow (based on the PDU set QoS parameter). When determining that a scenario is an L2 relay scenario, the SMF 70 does not need to send the first information (because in this case, the RAN 60 can sense existence of the first UE 50).

The RAN 60 determines, based on the first information, the first identifier, and the PDU set QoS parameter, to perform PDU set-based QoS control (first QoS handling) on the first QoS flow on the second link with reference to a first link state and a second link state.

In a possible implementation, when the first information is set to a first value (for example, "true"), it indicates that a corresponding first QoS flow is used for relay data transmission; or when the first information is set to a second value (for example, "false"), it indicates that data transmitted by using a corresponding QoS flow is non-relay data.

In a possible implementation, the first N1 message and the first N2 message are sent to the AMF 65 by using Namf_Communication_N1N2MessageTransfer.

In a possible implementation, the message may be sent when a session (PDU session) is modified or the session is established.

S109a: The AMF 65 sends the first N1 message to the second UE 55 via the RAN 60.

S109b: The AMF 65 sends the first N2 message to the RAN 60.

The first N2 message includes the first information. The first information indicates, to the RAN 60, that the first QoS flow associated with the first information is used for relay data transmission.

S110: The RAN 60 sends a first N2 response message to the AMF 65, where the first N2 response message indicates that QoS handling can be performed at a PDU set granularity.

S111: The AMF 65 sends a first transmission message to the SMF 70, where the first transmission message indicates that the QoS handling can be performed at the PDU set granularity.

Specifically, the first transmission message indicates that the RAN 60 can perform the QoS handling at the PDU set granularity.

S112: The SMF 70 sends a second N4 message to the UPF 75, where the second N4 message indicates the UPF 75 to identify PDU set information corresponding to data transmitted by using the first QoS flow.

The PDU set information includes but is not limited to a sequence number of a PDU set, an indication of a last PDU in the PDU set, a PDU sequence number of the PDU set, a size of the PDU set (for example, a size in a unit of byte), or importance of the PDU set. The importance of the PDU set is used to identify importance of the PDU set and the relay data transmitted by using the first QoS flow relative to another PDU set. When congestion occurs, the RAN 60 may discard a data packet whose PDU set has relatively low importance by determining importance of a PDU set in the first QoS flow.

In a possible implementation, the SMF 70 indicates that the UPF 75 can identify the PDU set based on a protocol description in a packet detection rule (Packet Detection Rule, PDR), to derive PDU set information of the relay data transmitted by using the first QoS flow, and send the PDU set information to the RAN 60 by using a downlink GTP-U header of each PDU identified as belonging to the PDU set. PDU set identification may be implemented by the UPF 75 or completed by detecting an RTP/SRTP header or a payload.

In a possible implementation, when first downlink data is a real-time transport protocol (Real-time Transport Protocol, RTP) or a secure real-time transport protocol (Secure Real-time Transport Protocol, SRTP), an identification action may be specifically derivation from the header, or derivation from a payload of the first downlink data.

S113: The second UE 55 initiates a first link modification procedure.

In a possible implementation, the second UE 55 initiates PC5 link modification, to create a new PC5 QoS flow or modify an existing PC5 QoS flow. The PC5 QoS flow is used to transfer, between the second UE 55 and the first UE 50, data transferred by the second UE 55 by using the first QoS flow. In other words, for downlink, the relay data received by the second UE 55 by using the first QoS flow is sent to the first UE 50 by using the PC5 QoS flow; for uplink, data of the first UE 50 received by the second UE 55 by using the PC5 QoS flow is transferred to a network side by using the first QoS flow.

In a possible implementation, the second UE 55 uses a Wi-Fi link to transfer data of an XR service between the second UE 55 and the first UE 50.

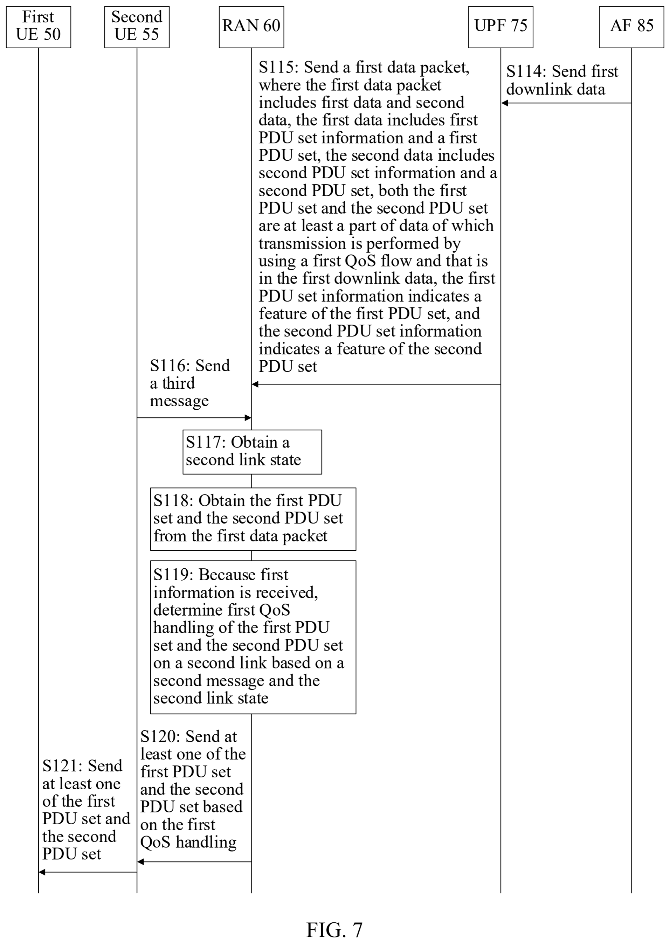

A data transmission procedure of the first solution is shown in FIG. 7.

S114: The UPF 75 receives the first downlink data sent by the AF 85.

The UPF 75 derives each piece of PDU set information from an application layer or a PDU layer of the first downlink data. For example, when the first downlink data is a video service, the UPF 75 may derive, in this manner, that data packets obtained by splitting a same video frame belong to a same PDU set.

S115: The UPF 75 sends a first data packet to the RAN 60, where the first data packet includes first data and second data, the first data includes first PDU set information and a first PDU set, the second data includes second PDU set information and a second PDU set, both the first PDU set and the second PDU set are at least a part of data transmitted by using the first QoS flow and that is in the first downlink data, the first PDU set information indicates a feature of the first PDU set, and the second PDU set information indicates a feature of the second PDU set.

The first data packet may also be referred to as second downlink data.

In a possible implementation, the PDU set information is added to a GTP-U header field of a data packet of the first data.

S116: The second UE 55 sends a third message to the RAN 60.

The second UE 55 may send the third message to the RAN 60 in real time based on a link state, or may periodically send the third message. In this case, there is no time sequence association relationship between this step and another step in the solution. In another case, this step may alternatively be triggered by data transmission.

Herein, if the second UE 55 sends a message through a control plane, the message is the third message. In this case, the second UE 55 may directly send the third message to the RAN 60 by using an RRC message, or may send the third message to a core network by using a NAS message, and then a core network device sends the third message to the RAN 60. If the second UE 55 sends a message through a user plane, the message is sent in an information form.

In an implementation, the third message includes the first link state (where this is an explicit manner).

In an implementation, the third message does not include the first link state, and the RAN 60 obtains the first link state based on the third message (where this is an implicit manner).

In an implementation, the third message includes a state of the first link between the second UE 55 and the first UE 50, for example, a state of PC5 or Wi-Fi; or the third message directly indicates the RAN 60 to discard a PDU set with low importance. Directly indicating packet discarding may be because the link between the second UE 55 and the first UE 50 is congested. For example, a transmission rate, a delay, or a packet discarding rate is lower than a specific threshold in comparison with an average value.

The RAN 60 may further determine the first link state. When the RAN 60 determines the first link state, step S116 may be omitted. A specific case in which the RAN 60 determines the first link state is as follows.

In a possible implementation, the RAN 60 determines the state of the first link based on a case in which the second UE 55 applies for a radio resource of the first link from the RAN 60 and the RAN 60 can allocate the radio resource. For example, when the RAN 60 cannot meet a radio resource requirement of the first link required by the second UE 55, or the radio resource requirement of the first link required by the second UE 55 is greater than a quantity of radio resources that can be allocated by the RAN 60, the RAN 60 determines that the state of the first link is deteriorated or the state of the first link is congested.

In a possible implementation, the RAN 60 determines the state of the first link based on sensing of a state reporting case related to the first link of the second UE 55. For example, a step of determining, by the second UE 55, the first link state, and reporting the first link state to the RAN 60 by using the RRC message is added.

In a possible implementation, the RAN 60 determines a state of the Wi-Fi link based on reporting of the second UE 55 to the RAN 60. For example, when a state of the Uu interface link is good but the state of the Wi-Fi link is poor, the RAN 60 directly discards data with low importance on the Uu interface link. For example, importance of the first PDU set may be high, importance of the second PDU set may be low, and a corresponding mark may be added or a difference between the PDU sets may be used for distinguishing. A link state level 0 indicates a good state of a PC5 link, and a link state level 1 indicates a poor state of the PC5 link. When the link state level is 0, transmission of both the first PDU set and the second PDU set is performed. When the link state level is 1, the second PDU set with low importance is discarded, and only transmission of the first PDU set is performed.

In a possible implementation, determining that the state of the first link is deteriorated or is congested is based on information such as a data transmission rate and a delay on the first link. For example, when the rate is lower than a preset threshold, or the delay exceeds a preset threshold, it may be considered that the state of the first link is deteriorated or is congested.

S117: The RAN 60 obtains the second link state.

In a possible implementation, the RAN 60 obtains the state of the Uu interface link between the second UE 55 and the RAN 60.

In a possible implementation, the RAN 60 obtains the state by periodically measuring a message.

In a possible implementation, the RAN 60 obtains a link state once before data transmission, and also periodically obtains the link state during data transmission.

S118: The RAN 60 obtains the first PDU set and the second PDU set from the first data packet.

Herein, the first PDU set and the second PDU set are merely examples for description, and the first data packet may include a plurality of PDU sets. The first data packet herein is a data packet corresponding to the SDF, that is, the relay data transmitted by using the first QoS flow.

S119: Because the first information is received, the RAN 60 determines first QoS handling of the first PDU set and the second PDU set on the second link based on the third message and the second link state.

In a possible implementation, the RAN 60 determines the first PDU set and the second PDU set by using the first PDU set information and the second PDU set information in S115.

In a possible implementation, the RAN 60 performs comprehensive determining by combining the state of the Uu interface link obtained in S117 and the state of the first link obtained in S116. In other words, transmission control of the second link needs to be combined with a transmission capability of the first link (for example, a current maximum transmission capability, where the transmission capability may be information such as the data transmission rate and the delay). For example, determining is performed based on the states of the two links. When the current transmission capability of the first link cannot meet a transmission requirement of the relay data transmitted by using the first QoS flow on the second link, packet discarding is performed on the second link based on an importance level of the relay data (for example, a PDU set with low importance is discarded), to ensure that data transmitted by using the first QoS flow on the second link can be transmitted to the first UE 50 through the first link (which is equivalent to ensuring that a PDU set with high importance is preferentially transmitted).

Alternatively, it is directly determined, based on the packet discarding indication obtained in S116, to discard a PDU set with low importance on the second link based on the PDU set for data transmitted by using the first QoS flow.

In a possible implementation, when the link state is good, the RAN 60 performs transmission to the second UE 55 based on the PDU set granularity and a requirement of the PDU set QoS parameter in the first N2 message.

In a possible implementation, for different transmission capabilities of the first link, different packet discarding mechanisms are performed on the first QoS flow on the second link based on the transmission capabilities of the first link. A mapping relationship between different transmission capabilities of the first link and importance of a PDU set on the second link is set. Further, different transmission capabilities may correspond to different link state levels, and different packet discarding mechanisms are performed for different link state levels. A mapping relationship between a level of the first link state and importance of a PDU set to be discarded is set. For a predefined level of the first link state, the RAN 60 discards a data packet with corresponding importance based on the PDU set granularity. For example, when there are eight importance levels of PDU sets to be discarded, if a congestion level of the first link is 1, the PDU set whose importance level is 8 is discarded; or if a congestion level of the first link is 2, the PDU sets whose importance levels are 8 and 7 are discarded. Based on different definitions of the level of the first link state, the second UE 55 may report, to the RAN 60, the state level of the first link, or information such as the transmission rate and the delay of the first link, or information indicating that the state of the first link is deteriorated or is congested. The importance of the PDU sets is distinguished as described in S116.

In a possible implementation, the second UE 55 may directly notify, based on the state of the Wi-Fi link or the PC5 link, the RAN 60 to discard a PDU set with specific importance on the Uu interface link, for example, the second PDU set with low importance.

In this method, the RAN 60 discards a PDU set with a low priority, so that an unnecessary waste of transmission resources can be avoided and user experience can be improved. For example, it is assumed that the state of the PC5 link is congested, but in this case, the RAN 60 does not discard an unimportant PDU set on the Uu interface link. In this case, because a rate of the PC5 link is limited, an important PDU set may be discarded, which deteriorates user experience.

S120: The RAN 60 sends at least one of the first PDU set and the second PDU set to the second UE 55 based on the first QoS handling.

In a possible implementation, the RAN 60 sends the downlink data to the second UE 55 by using a data radio bearer (data radio bearer, DRB) of the Uu interface link.

In a possible implementation, when the state of the first link is good, the RAN 60 may send all PDU sets to the second UE 55 based on the PDU set QoS parameter of the second link.

S121: The second UE 55 sends at least one of the first PDU set and the second PDU set to the first UE 50.

In a possible implementation, according to the method in this embodiment, in an L3 relay scenario and a Wi-Fi hotspot scenario, the SMF 70 indicates the RAN 60, so that the RAN 60 determines to perform, at the PDU set granularity, the first QoS handling on the first data packet to be sent to the first UE 50. The first data packet is in the first QoS flow. In addition, the RAN 60 comprehensively determines the first QoS handling based on the state of the second link and the third message reported by the second UE 55. The state of the first link is used as a factor that needs to be considered when the first QoS handling is performed on the second link, to avoid a waste that is of transmission resources from the RAN 60 to the second UE 55 and that is caused because a packet is discarded after being transmitted to the second UE 55 when the state of the first link is poor or is congested.

The foregoing steps in this embodiment may be combined into a complete procedure. This embodiment further provides another implementation, which is described in detail below.

A preceding procedure of a second solution is the same as that in FIG. 5.

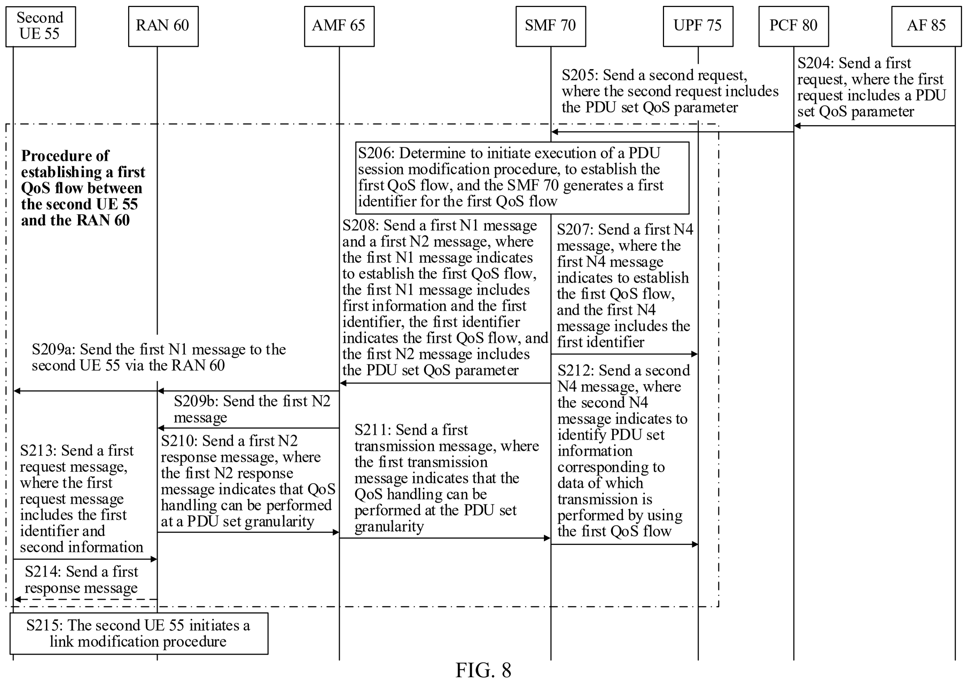

A signaling procedure of the second solution is shown in FIG. 8. Compared with the procedure in FIG. 6, a difference lies in the following steps.

S208: An SMF 70 sends a first N1 message and a first N2 message to an AMF 65, where the first N1 message indicates to establish a first QoS flow, the first N1 message includes first information and a first identifier, the first identifier indicates the first QoS flow, and the first N2 message includes a PDU set QoS parameter.

A main difference between this step and S108 lies in the following: In this step, the first N1 message includes the first information, and the message is finally sent to a second UE. However, in S108, the first N2 message includes the first information, and the message is finally sent to the RAN.

In a possible implementation, the first information included in the first N1 message may be an indication parameter, and indicates that the first QoS flow is used for relay data transmission and/or indicates to perform PDU set-based QoS control on the first QoS flow. Alternatively, the first information may indicate that the first QoS flow is used for transmission of relay data and/or the PDU set QoS parameter, and the second UE 55 determines, by using the PDU set QoS parameter, to perform PDU set-based QoS control on the first QoS flow. Herein, performing PDU set-based QoS control on the first QoS flow is QoS handling.

In a possible implementation, SM information in the first N2 message includes the first information only when the SMF 70 determines that a PDU session or the first QoS flow is used for relay data transmission and/or PDU set-based QoS control is performed.

In a possible implementation, when the first information is set to a first value, it indicates that data transmitted by using a corresponding QoS flow is relay data; or when the first information is set to a second value, it indicates that data transmitted by using a corresponding QoS flow is non-relay data.

In a possible implementation, the first N1 message and the first N2 message are sent to the AMF 65 by using Namf_Communication_N1N2MessageTransfer.

In a possible implementation, the message may be sent when a session (PDU session) is modified or the session is established.

S213: The second UE 55 sends a first request message to the RAN 60, where the first request message includes the first identifier and second information.

In a possible implementation, before this step, the second UE 55 transfers, to an AS stratum of the second UE 55, the first information and the first identifier that are obtained from the first N1 message, so that the AS stratum of the second UE 55 sends the first request message to the RAN 60. For example, the AS layer of the second UE 55 sends the first request message to the RAN 60 by using an RRC message.

In a possible implementation, the second UE 55 determines that the first QoS flow is used for relay data transmission (where determining may be performed based on the first information in S208, or performed by the second UE 55, for example, the second UE 55 determines that the PDU session is used for relay data transmission, and the first QoS flow belongs to the PDU session) and/or determines to perform PDU set-based QoS control on the first QoS flow (where determining is performed based on a case of the first information described in S208), and sends the first request message. The RAN 60 determines, based on the first request message, to perform PDU set-based QoS control on the first QoS flow on a second link with reference to a first link state and a second link state. Further, the RAN 60 determines, based on the first request message and the PDU set QoS parameter included in the first N2 message, to perform PDU set-based QoS control on the first QoS flow on the second link with reference to the first link state and the second link state (where PDU set-based QoS control performed on the first QoS flow herein is first QoS handling).

S214: The RAN 60 sends a first response message to the second UE 55.

A data transmission procedure of the second solution is the same as the procedure in FIG. 7.

In this implementation, in an L3 relay scenario and a Wi-Fi scenario, the second UE 55 indicates the RAN 60, so that the RAN 60 determines to perform, at a PDU set granularity, the first QoS handling on a first data packet to be sent to a first UE 50. The first data packet is in the first quality of service flow. In addition, the RAN 60 comprehensively determines the first QoS handling based on a state of the second link and a third message reported by the second UE 55. A state of a first link is used as a factor that needs to be considered when the first QoS handling is performed on the second link, to avoid a waste that is of transmission resources from the RAN 60 to the second UE 55 and that is caused because a packet is discarded after being transmitted to the second UE 55 when the state of the first link is poor or is congested.

In addition to the foregoing two solutions based on the L3 relay, this embodiment further provides a third solution, which is a solution based on the L2 relay. The following provides specific descriptions.

A difference between the third solution and the foregoing two solutions lies in that the third solution is a network architecture based on the L2 relay. In this scenario, the RAN 60 may sense, without an indication, a QoS flow used for relay data transmission. The following provides detailed descriptions with reference to the figures.

A preceding procedure of the third solution is shown in FIG. 9. Compared with FIG. 5, a difference lies in a change caused due to a different network architecture after a first UE 50 and a second UE 55 establish a link connection in S302a. Main different steps are as follows.

S302b: The first UE 50 establishes a link connection to the RAN 60 via the second UE 55, and in an establishment procedure, the RAN 60 learns that the second UE 55 performs the L2 relay for the first UE 50.

S303: Based on the L2 relay architecture, the first UE 50 establishes a relay PDU session with a network via the second UE 55.

A signaling procedure of the third solution is shown in FIG. 10. In this implementation, the RAN 60 may sense, without an indication, a first QoS flow used for relay data transmission. Therefore, when an SMF 70 delivers an N1 message and an N2 message, the procedure is different from the procedure of the foregoing L3 relay solution. A specific difference lies in the following step.

S309: The SMF 70 sends a first N1 message and a first N2 message to an AMF 65, where the first N1 message indicates to establish the first QoS flow, the first N2 message includes a PDU set QoS parameter and a first identifier, and the first identifier indicates the first QoS flow.

In other words, the first N2 message herein does not carry additional related information indicating, to the RAN 60, the QoS flow for relay data transmission.

A data transmission procedure of the third solution is the same as the procedure in FIG. 7.

In summary, in this implementation, in an L2 relay scenario, the RAN 60 may determine, in a manner of sensing by the RAN 60, a first data packet to be sent to the first UE 50, and perform first QoS handling on the first data packet at a PDU set granularity. The first data packet is in the first quality of service flow. In addition, the RAN 60 comprehensively determines the first QoS handling based on a state of a second link and a third message reported by the second UE 55. A state of a first link is used as a factor that needs to be considered when the first QoS handling is performed on the second link, to avoid a waste that is of transmission resources from the RAN 60 to the second UE 55 and that is caused because a packet is discarded after being transmitted to the second UE 55 when the state of the first link is poor or is congested.

In addition to the three solutions in this embodiment, another implementation solution is further provided. The following describes Embodiment 2 in detail.

### Embodiment 2

This embodiment is an implementation in which a second UE 55 performs data transmission with reference to a state and a link requirement of a subsequent link. Two solutions are specifically included based on how to obtain the link requirement. The following provides detailed descriptions with reference to the figures.

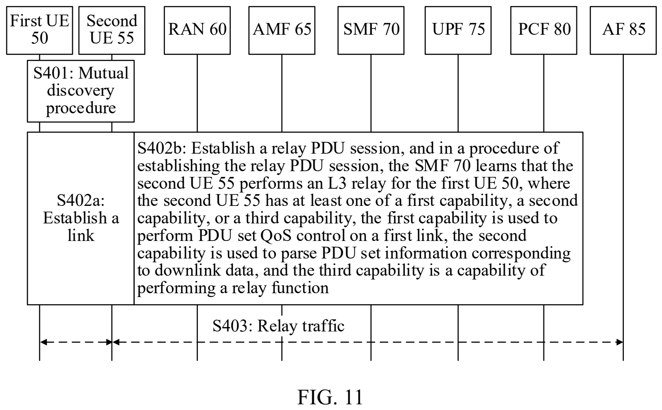

A preceding procedure of a first solution is shown in FIG. 11. Compared with FIG. 5, a difference lies in the following procedure.

S402b: Establish a relay PDU session, and in a procedure of establishing the relay PDU session, an SMF 70 learns that the second UE 55 performs an L3 relay for a first UE 50, where the second UE 55 has at least one of a first capability, a second capability, or a third capability, the first capability indicates that the second UE 55 has a capability of performing PDU set-based QoS control on a first link, the second capability indicates that the second UE 55 has a capability of determining PDU set information corresponding to a data packet by parsing the data packet, and the third capability indicates that the second UE 55 has a capability of performing a relay function (including, for example, the L3 relay, an L2 relay, or a Wi-Fi relay).

In an implementation, after the first capability, the second capability, and the third capability are reported to the SMF 70, the SMF 70 determines to perform PDU set-based QoS control (sending a PC5 PDU set QoS parameter to the second UE 55 and/or indicating a RAN 60 to send PDU set information of downlink data to the second UE 55) on the first link, as described in S409. Further, after learning of the first capability and the third capability that are reported by the second UE 55 (where the second UE 55 can perform PDU set-based QoS control on the first link only when the second UE 55 has the first capability and the third capability), the SMF 70 needs to determine to perform PDU set-based QoS control on the first link. For the second capability, the SMF 70 determines that the second UE 55 derives the PDU set information, or the second UE 55 parses the data packet delivered by the RAN 60 to obtain the PDU set information.

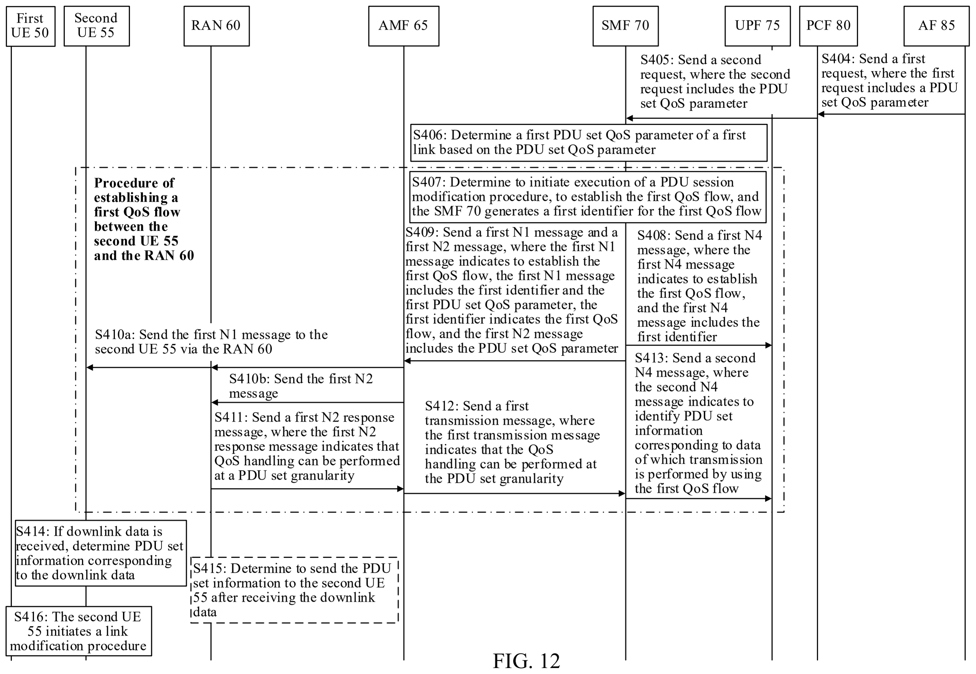

A signaling procedure of the first solution is shown in FIG. 12. Compared with FIG. 8, a difference lies in the following steps.

S406: The SMF 70 determines a first PDU set QoS parameter of the first link based on a PDU set QoS parameter.

In a possible implementation, the SMF 70 determines the first PDU set QoS parameter of the first link based on a PDU set QoS parameter in a second request.

In a possible implementation, the SMF 70 determines the first PDU set QoS parameter of the first link and a second PDU set QoS parameter of a second link based on a PDU set QoS parameter. The first PDU set QoS parameter includes but is not limited to any one of the following:
- a PC5 PDU set delay budget (PC5 PDU Set Delay Budget, PC5-PSDB), which is an upper limit of a delay that may be experienced when data transmission is performed between the second UE 55 and the first UE 50 at a PDU set granularity;
- a PC5 PDU set error rate (PC5 PDU Set Error Rate, PC5-PSER), which is used to set a ratio of a quantity of PDU sets that have been handled by the second UE but have not been successfully handled by the first UE, and includes a first preset error rate, where a first ratio needs to be less than or equal to the first preset error rate, the first ratio is a ratio of a quantity of first PDU sets to a quantity of second PDU sets, the quantity of first PDU sets is a quantity of PDU sets that have been sent by the second UE but have not been successfully received by the first UE, and the quantity of second PDU sets is a quantity of PDU sets that have been sent by the second UE; or the error rate is an upper limit of a ratio of a quantity of PDU sets that have been handled by a link layer protocol of a sender (for example, an RLC layer of the second UE 55 accessed by using 3GPP) but have not been successfully sent by a corresponding receiver to an upper layer (for example, a PDCP layer of the first UE 50 accessed by using 3GPP); and
- PC5 PDU set integrated handling information (PC5 PDU Set Integrated Handling Information, PC5-PSIHI), which indicates whether an application layer on a receiving side needs all PDUs of an entire PDU set for handling, and the handling includes decoding and the like; or whether a receiving side needs all PDUs of an entire PDU set.

S409: The SMF 70 sends a first N1 message and a first N2 message to an AMF 65, where the first N1 message indicates to establish a first QoS flow, the first N1 message includes a first identifier and the first PDU set QoS parameter, the first identifier indicates the first QoS flow, and the first N2 message includes a PDU set QoS parameter.

In a possible implementation, the first N2 message further includes: The SMF 70 indicates the RAN 60 to add the PDU set information to a header of relay data to be subsequently sent to the second UE 55. This corresponds to a scenario in which the RAN 60 delivers the PDU set information in the following S419.

In a possible implementation, the first N1 message includes the first PDU set QoS parameter only when the second UE 55 reports at least one of the first capability, the second capability, or the third capability in S402b.

In a possible implementation, the first N1 message and the first N2 message are sent to the AMF 65 by using Namf_Communication_N1N2MessageTransfer.

In a possible implementation, the message may be sent when a session (PDU session) is modified or the session is established.

In a possible implementation, the first N1 message may include first indication information. After receiving the first indication information, the second UE 55 determines, in S414, to parse PDU set information corresponding to downlink data after receiving the downlink data.

In a possible implementation, the first N1 message includes the first identifier and the first PDU set QoS parameter, and does not include first indication information. In this case, after the second UE 55 receives the first identifier and the first PDU set QoS parameter, the second UE 55 determines, in S414, to parse PDU set information corresponding to downlink data after subsequently receiving the downlink data.

In a possible implementation, the first PDU set QoS parameter may be a PC5 PS QoS parameter.

In a possible implementation, the PDU set QoS parameter included in the first N2 message is used for the second link.

S414: If the second UE 55 receives downlink data, the second UE 55 determines PDU set information corresponding to the downlink data.

In a possible implementation, after receiving the first N1 message, the second UE 55 determines to parse PDU set information corresponding to a PDU set in downlink data after receiving the downlink data. Further, the second UE 55 determines, based on the PC5 PS QoS parameter included in the first N1 message, to perform PDU set-based QoS control on the first link, and parses corresponding PDU set information for data subsequently received by using the first QoS flow. In this manner, the RAN 60 adds the PDU set information to the downlink data, for example, adds the PDU set information to an AS layer header of the downlink data.

In a possible implementation, after receiving the first N1 message, the second UE 55 determines to derive (derive) PDU set information corresponding to a PDU set in downlink data after receiving the downlink data. Further, the second UE 55 determines, based on the PC5 PS QoS parameter included in the first N1 message, to perform PDU set-based QoS control on the first link, and derives corresponding PDU set information for data subsequently received by using the first QoS flow. In a scenario in which derivation is required, the second UE 55 obtains PDU set information by deriving an application layer header and/or a transport layer header of data, for example, derives the PDU set information based on RTP/SRTP layer header information of the data. An execution manner is described in S420.

S415: The RAN 60 determines, after receiving downlink data sent by a UPF 75, to send the downlink data including PDU set information to a relay UE.

This step is optional. To be specific, the RAN 60 may not add the PDU set information when sending the downlink data to the second UE 55.

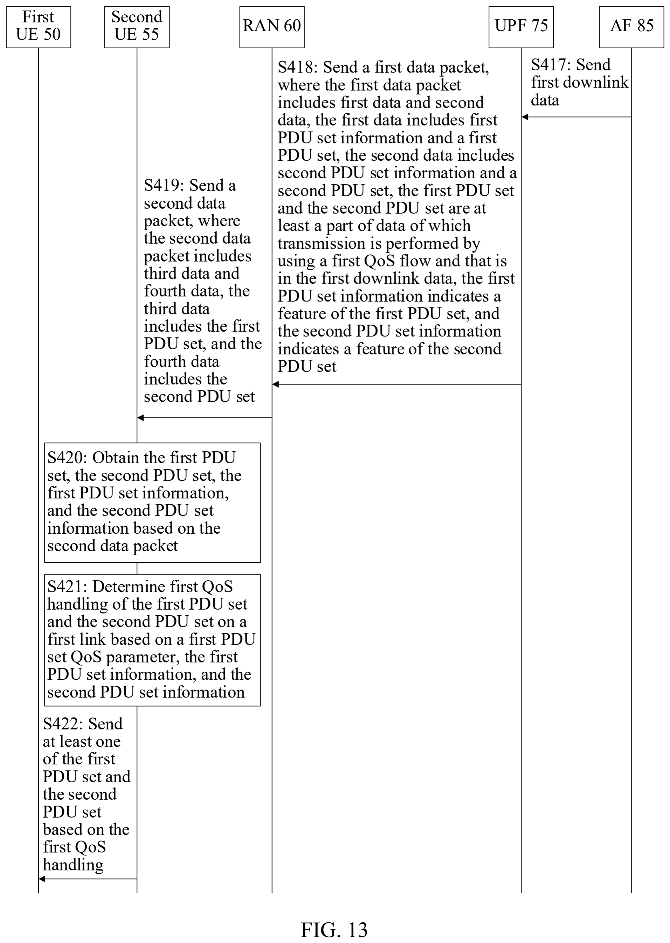

A data transmission procedure of the first solution is shown in FIG. 13. Compared with FIG. 7, a difference lies in the following when data is transmitted to the RAN 60.

S419: The RAN 60 sends a second data packet to the second UE 55, where the second data packet includes third data and fourth data, the third data includes the first PDU set, and the fourth data includes the second PDU set.

The second data packet herein is different from a first data packet. Because a protocol stack between the RAN 60 and the UPF 75 is different from a protocol stack between the RAN 60 and the second UE 55, a different header is used.

In a possible implementation, the second data packet may also be referred to as third downlink data.

After receiving a third message and obtaining the first data packet, the RAN 60 handles the packet depending on whether determining to send the PDU set information to the second UE 55 in S415. There are at least the following two handling manners.

Manner 1: First PDU set information is obtained from a first header, second PDU set information is obtained from a second header, the first PDU set information is set in a third header, the second PDU set information is set in a fourth header, the third data includes the third header and the first PDU set, and the fourth data includes the fourth header and the second PDU set. The third header is located in the second data packet and corresponds to the first PDU set; and the fourth header is located in the second data packet and corresponds to the second PDU set.

A manner in which the RAN 60 sends the PDU set information to the second UE 55 may be sending the PDU set information to the second UE 55 by using an AS layer. For example, the manner is any one of the following manners.

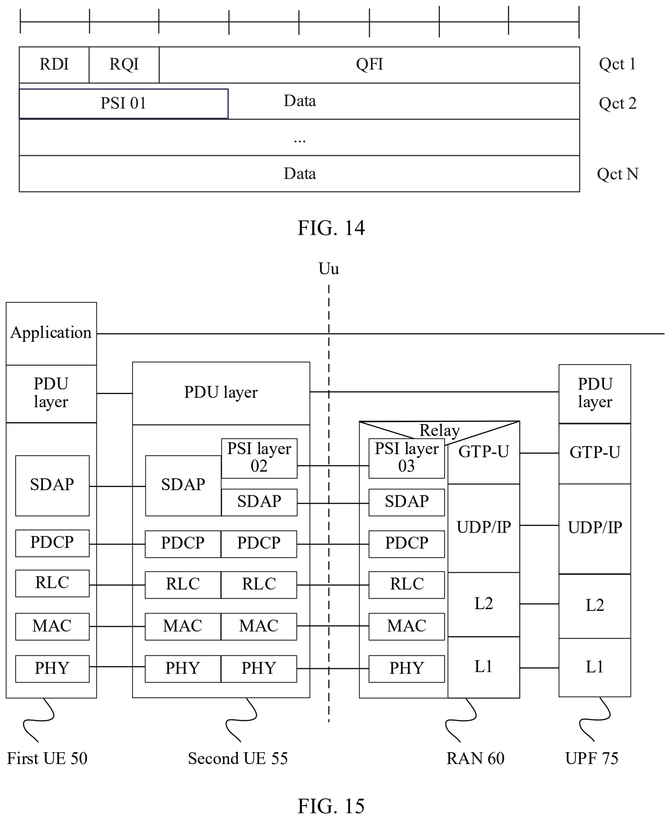

An SDAP may be enhanced. As shown in FIG. 14, SDAP data sent by the RAN 60 to the second UE 55 includes the PDU set information (PSI 01 in the figure).

A PSI layer may be newly added above the SDAP, and the PSI layer includes the PDU set information. As shown in FIG. 15, in a protocol stack, newly added PSI layers may be a PSI layer 02 and a PSI layer 03 in the second UE 55 and the RAN 60.

A PDCP layer may be enhanced, and the PDU set information is added to a PDCP layer header. The solution is applicable to an L3 relay scenario.

An RLC layer may be enhanced, and PSI information is added to an RLC layer header. The solution is applicable to an L2 relay scenario and the L3 relay scenario.

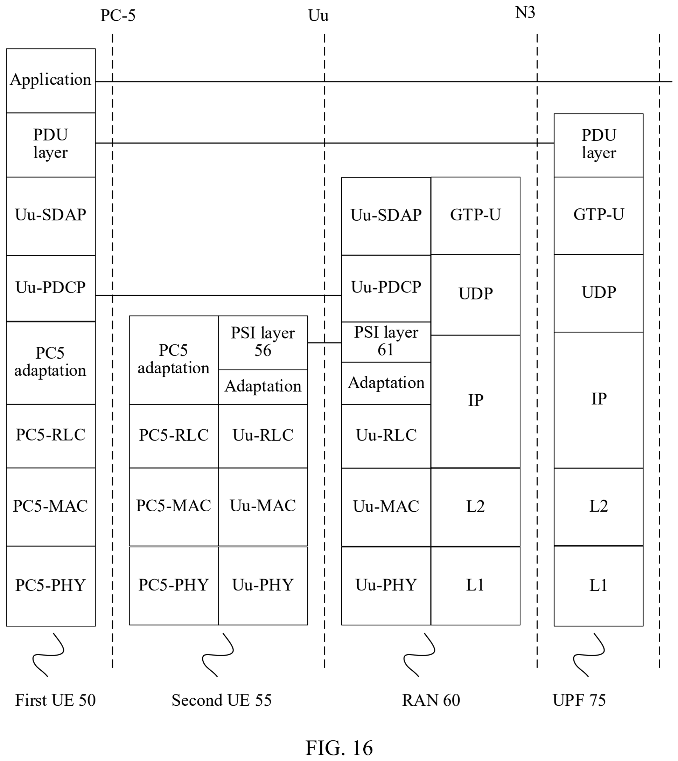

A PSI layer may be newly added above an adaptation layer. The PSI layer includes the PDU set information. The solution is applicable to the L2 relay scenario. As shown in FIG. 16, in a protocol stack, newly added PSI layers may be a PSI layer 56 and a PSI layer 61 in the second UE 55 and the RAN 60.

Manner 2: First PDU set information is obtained from a first header, second PDU set information is obtained from a second header, the first PDU set information is not set in a third header, the second PDU set information is not set in a fourth header, the third data includes the third header and the first PDU set, and the fourth data includes the fourth header and the second PDU set. The third header is located in the second data packet, and the fourth header is located in the second data packet. Further, the third header does not include information corresponding to the first PDU set, and the fourth header does not include information corresponding to the second PDU set.

S420: The second UE 55 obtains the first PDU set, the second PDU set, the first PDU set information, and the second PDU set information based on the second data packet.

In an implementation, the second UE 55 directly obtains the first PDU set, the second PDU set, the first PDU set information, and the second PDU set information from the second data packet. This implementation corresponds to Manner 1 in S418. The second UE 55 can directly and quickly obtain the foregoing content from the second data packet.

In an implementation, the first PDU set and the second PDU set are directly obtained from the second data packet; and the first PDU set information and the second PDU set information are derived (derived) from the second data packet. This implementation corresponds to Manner 2 in S418. The second UE 55 can directly and quickly obtain the first PDU set and the second PDU set from the second data packet, but cannot directly and quickly obtain the first PDU set information or the second PDU set information from the second data packet. In this implementation, the second UE 55 needs to derive the first PDU set information and the second PDU set information based on the second data packet. This manner is time-consuming. For example, the second UE 55 detects a header or a payload of a transport layer or an application layer (for example, an RTP/SRTP) in the second data packet, to identify the first PDU set and the second PDU set and determine the first PDU set information and the second PDU set information.

Further, in any one of the foregoing implementations, after the first PDU set, the second PDU set, the first PDU set information, and the second PDU set information are obtained from the second data packet, the first PDU set information and the second PDU set information are transferred to the AS layer.

S421: The second UE 55 determines first QoS handling of the first PDU set and the second PDU set on the first link based on the first PDU set QoS parameter, the first PDU set information, and the second PDU set information.

The first QoS handling is to meet the first PDU set QoS parameter as much as possible based on the PDU set granularity, and discard a PDU set with low importance when a network or link congestion problem occurs.

S422: The second UE 55 sends at least one of the first PDU set and the second PDU set based on the first QoS handling.

In addition to the foregoing technical solution, this embodiment further provides a second implementation, which is specifically described below.

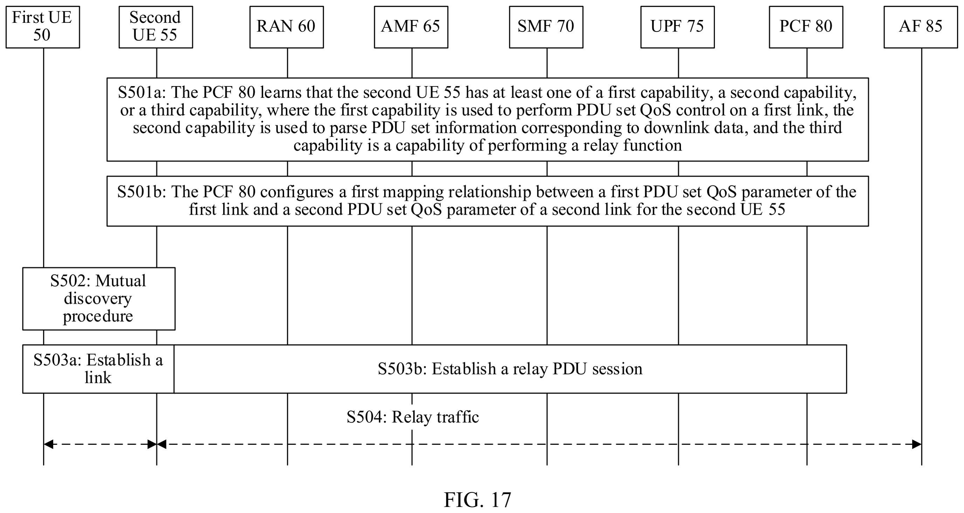

A preceding procedure of a second solution is shown in FIG. 17. Compared with FIG. 5, a difference lies in the following.

S501a: A PCF 80 learns that the second UE 55 has at least one of a first capability, a second capability, or a third capability, where the first capability is used to perform PDU set-based QoS control on a first link, the second capability is used to parse PDU set information corresponding to downlink data, and the third capability is a capability of performing a relay function.

In a possible implementation, the PCF 80 learns that the capability of the second UE 55 is in a procedure in which the second UE 55 registers with a network or after the second UE 55 registers with the network.

In the network registration procedure, the second UE 55 sends a registration request message to an AMF 65, where the registration request message includes at least one of the first capability, the second capability, or the third capability. The AMF 65 sends a message to the PCF 80, where the message includes at least one of the first capability, the second capability, or the third capability.

S501b: The PCF 80 configures a first mapping relationship between a first PDU set QoS parameter of the first link and a second PDU set QoS parameter of a second link for the second UE 55.

In a possible implementation, in an alternative manner of S501a and S501b, the first mapping relationship may be factory-set or preconfigured. In this case, steps S501a and S501b may be directly replaced.

Step S503b of establishing a relay PDU session may be combined with S501b in S503b.

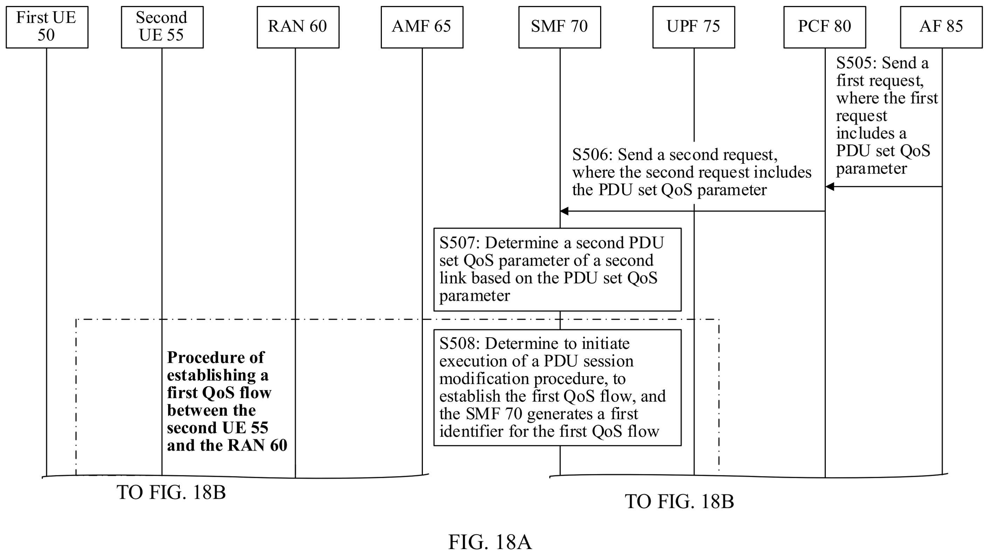

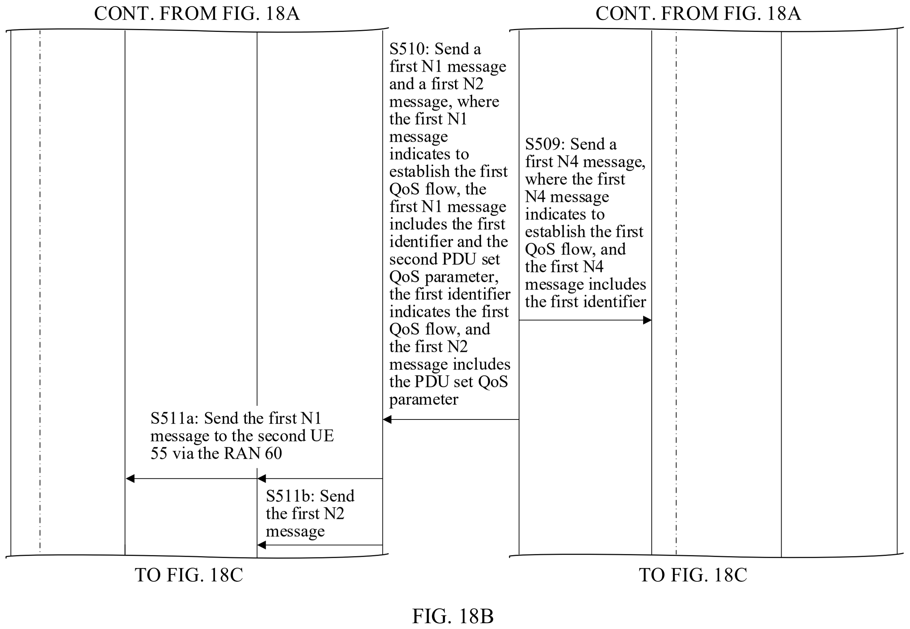

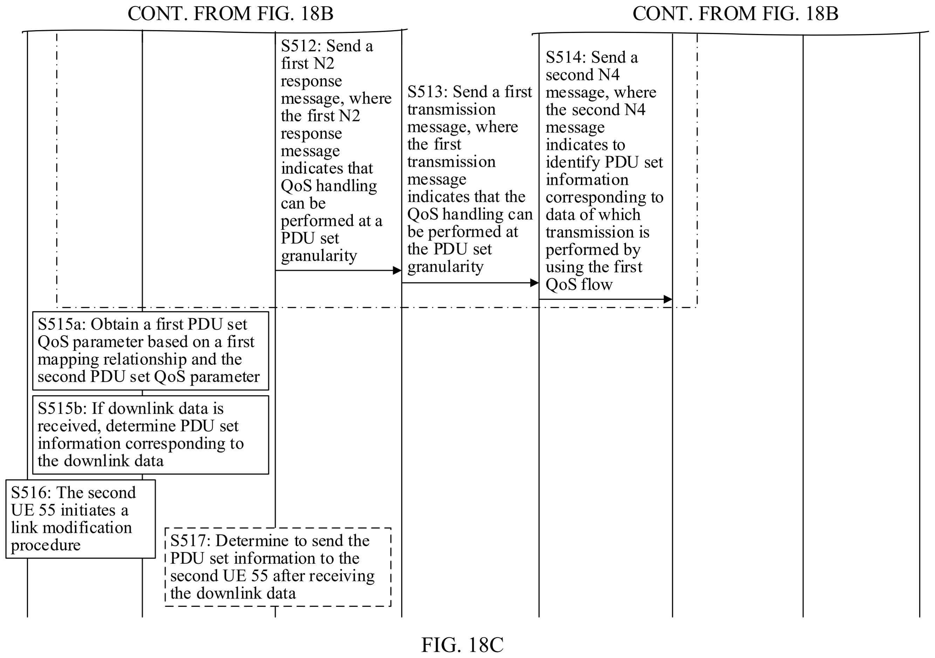

A signaling procedure of the second solution is shown in FIG. 18A to FIG. 18C. Compared with FIG. 12, a main difference lies in the following steps.

S507: An SMF 70 determines the second PDU set QoS parameter of the second link based on a PDU set QoS parameter.

In a possible implementation, the SMF 70 determines the second PDU set QoS parameter of the second link based on a PDU set QoS parameter in a second request.

In a possible implementation, the SMF 70 determines the first PDU set QoS parameter of the first link and the second PDU set QoS parameter of the second link based on a PDU set QoS parameter.

S510: The SMF 70 sends a first N1 message and a first N2 message to the AMF 65, where the first N1 message indicates to establish a first QoS flow, the first N1 message includes a first identifier and the second PDU set QoS parameter, the first identifier indicates the first QoS flow, and the first N2 message includes a PDU set QoS parameter.

In a possible implementation, the first N1 message includes the second PDU set QoS parameter only when the second UE 55 reports at least one of the first capability, the second capability, or the third capability in S402b.

In a possible implementation, the first N1 message and the first N2 message are sent to the AMF by using Namf_Communication_N1N2MessageTransfer.

In a possible implementation, the message may be sent when a session (PDU session) is modified or the session is established.

In a possible implementation, the first N1 message may include first indication information. After receiving the first indication information, the second UE 55 determines, in S515b, to parse PDU set information corresponding to downlink data after receiving the downlink data.

In a possible implementation, the first N1 message does not include first indication information, and includes the first identifier and the second PDU set QoS parameter. After receiving the first identifier and the second PDU set QoS parameter, the second UE 55 determines, in S515b, to parse PDU set information corresponding to downlink data after receiving the downlink data.

In a possible implementation, the second PDU set QoS parameter may be a PDU set QoS parameter used for a Uu interface link.

S515a: The second UE 55 obtains the first PDU set QoS parameter based on the first mapping relationship and the second PDU set QoS parameter.

A data transmission procedure of the second solution is the same as that in FIG. 13. A mechanism for obtaining the PDU set information by the second UE 55 is also the same as the mechanism listed in the first solution. In the following, when the data transmission procedures are the same, it indicates that mechanisms for obtaining the PDU set information are also the same, unless otherwise described.

In this application, in addition to separately implementing the technical solutions in the two embodiments described above, the technical solutions in the two embodiments may be combined for use, which is equivalent to performing control on two nodes on a network, to obtain a more complete technical effect. The following describes Embodiment 3 in detail.

### Embodiment 3

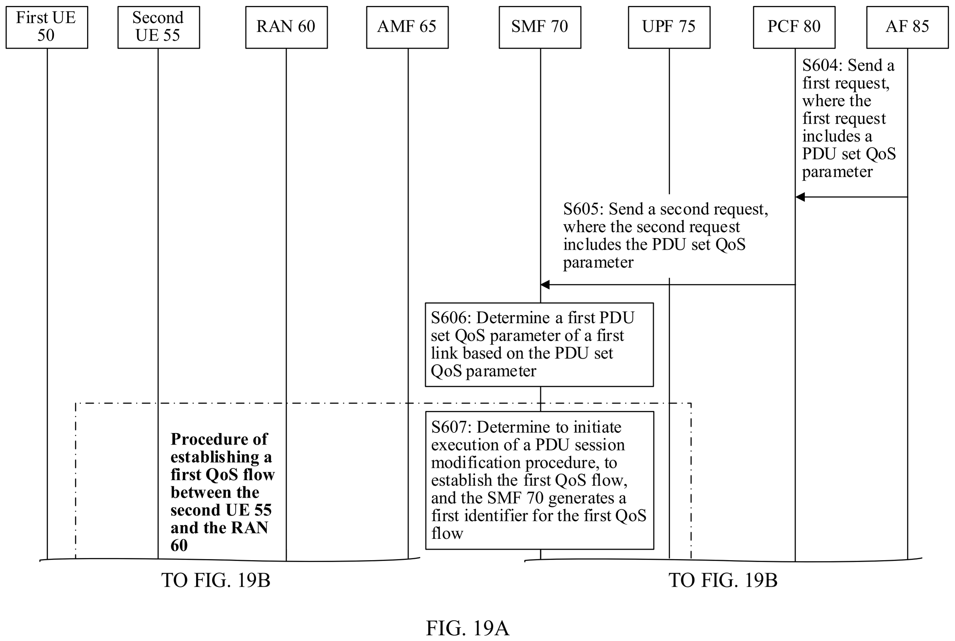

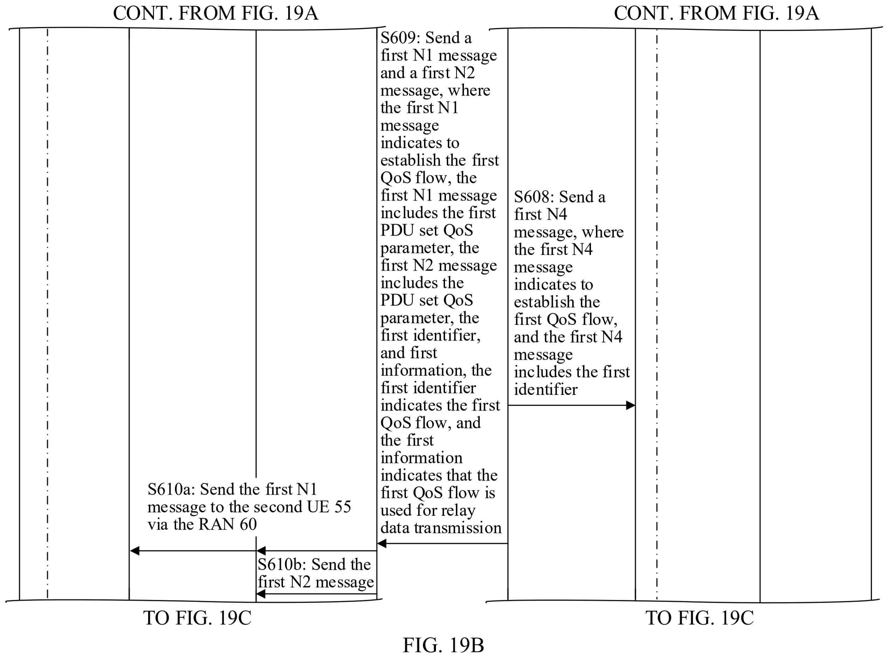

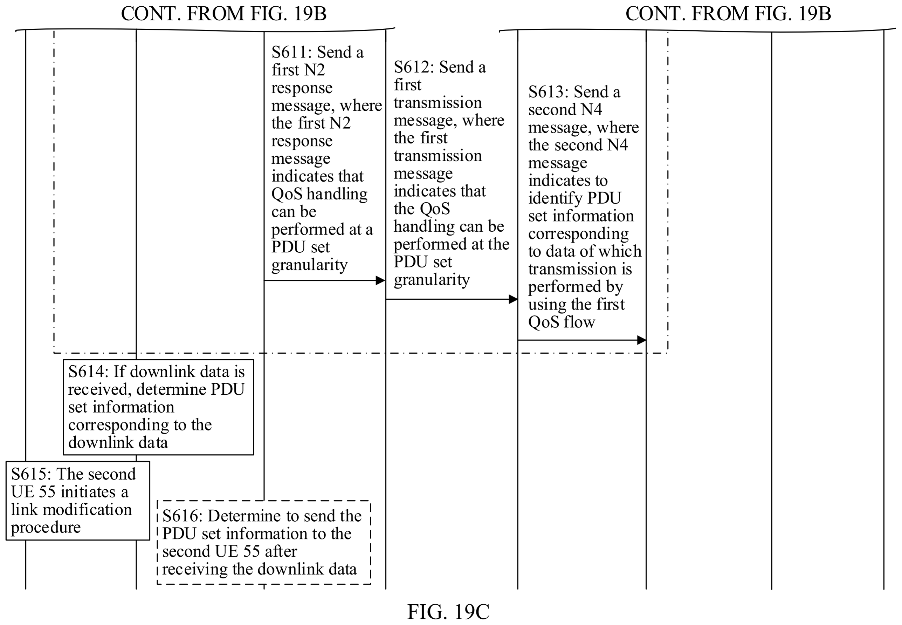

This embodiment is an implementation in which a network comprehensively considers states or link requirements of two subsequent links during data transmission, and a relay device, namely, a second UE 55, also considers the states or the link requirements of the subsequent links. This embodiment is a combination of the first solution of Embodiment 1 and the first solution of Embodiment 2. This embodiment corresponds to FIG. 19A to FIG. 22C. The following starts to provide detailed descriptions with reference to the figures.

First, a first solution is a combination of the first implementation of Embodiment 1 and the second implementation of Embodiment 2.

A preceding procedure of the first solution is the same as that in FIG. 11.

A signaling procedure of the first solution is a combination of FIG. 6 and FIG. 12. As shown in FIG. 19A to FIG. 19C, the following changes are caused by the combination.

S609: An SMF 70 sends a first N1 message and a first N2 message to an AMF 65, where the first N1 message indicates to establish a first QoS flow, the first N1 message includes a first PDU set QoS parameter, the first N2 message includes a PDU set QoS parameter, a first identifier, and first information, the first identifier indicates the first QoS flow, and the first information indicates that the first QoS flow is used for relay data transmission.

In a possible implementation, the first N1 message and the first N2 message are sent to the AMF by using Namf_Communication_N1N2MessageTransfer.

In a possible implementation, the message may be sent when a session (PDU session) is modified or the session is established.

In a possible implementation, the first N1 message may include first indication information. After receiving the first indication information, the second UE 55 determines, in S614, to parse PDU set information corresponding to downlink data after receiving the downlink data.

In a possible implementation, the first N1 message does not include first indication information, and includes the first identifier and the first PDU set QoS parameter. After receiving the first identifier and the first PDU set QoS parameter, the second UE 55 determines, in S614, to parse PDU set information corresponding to downlink data after receiving the downlink data.

In a possible implementation, the first PDU set QoS parameter is applied to a first link. For example, when the first link is PC5, the parameter may be a PC5 PS QoS parameter.

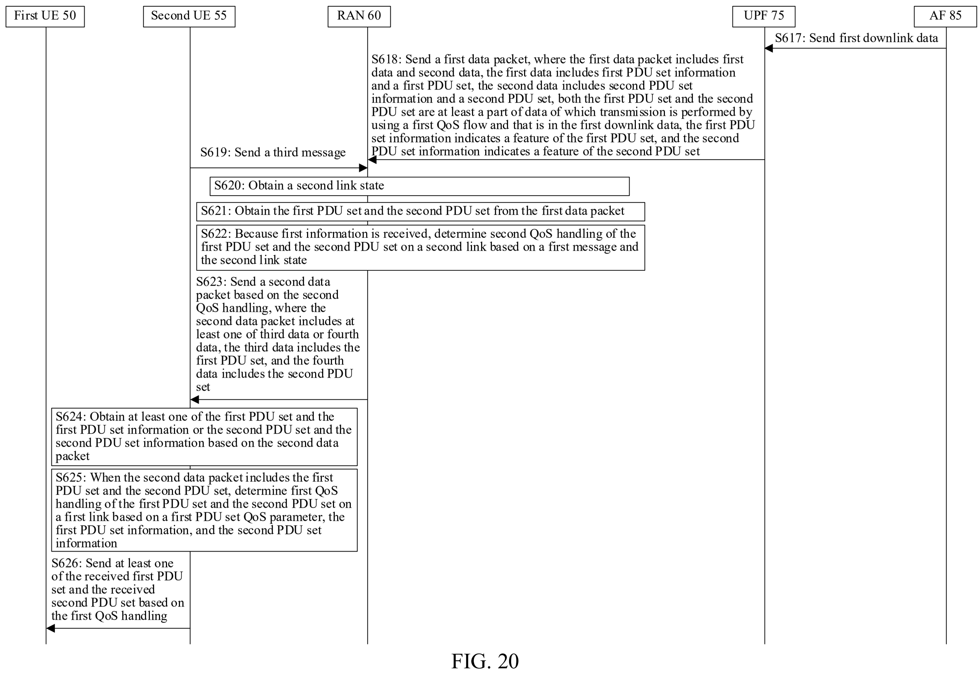

A data transmission procedure of the first solution is shown in FIG. 20, and is a combination of FIG. 7 and FIG. 13. The downlink data is handled from a server to a RAN 60 via a UPF 75, and this is the same as that in FIG. 7. The downlink data is handled from the RAN 60 to a first UE 50, and this is the same as that in FIG. 13. It should be noted that, although two pieces of data, including two PDU sets, are used as an example for description in a downlink data packet in the procedure, actually, there are more pieces of data. Based on a case in which the RAN 60 and the second UE 55 separately handle the data in this embodiment, the RAN 60 and the second UE 55 may respectively discard some data (PDU Sets) based on handling determined by the RAN 60 and handling determined by the second UE 55.

This embodiment further provides another implementation for a combined technical solution. The following describes a second implementation of this embodiment.

A second solution is specifically a combination of the first implementation of Embodiment 1 and the second implementation of Embodiment 2.

A preceding procedure of the second solution is the same as that in FIG. 17.

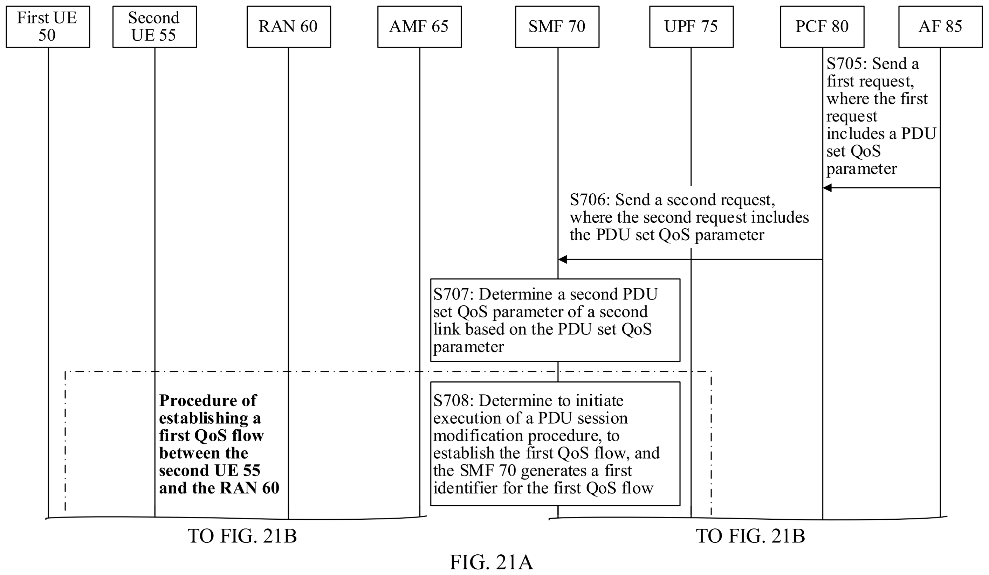

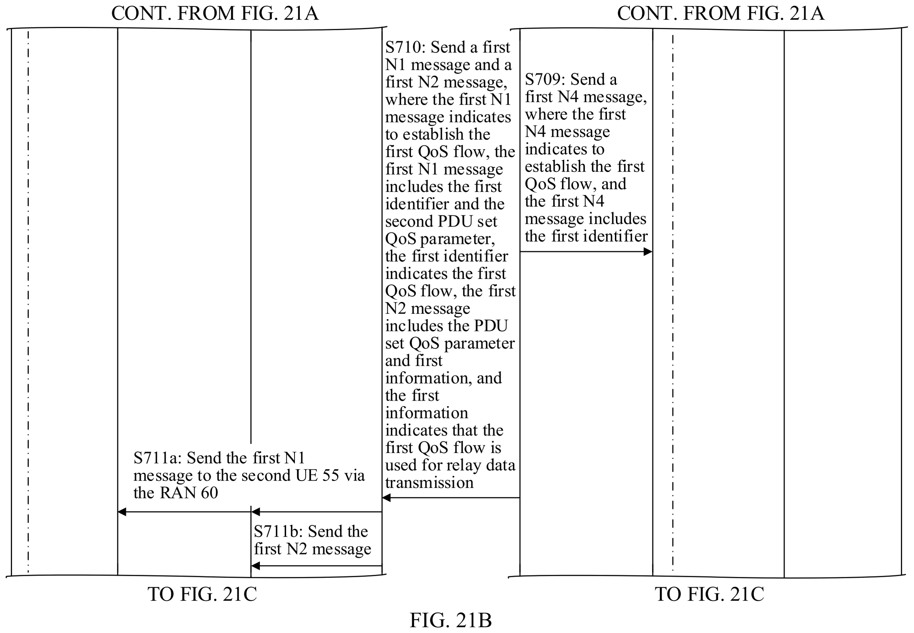

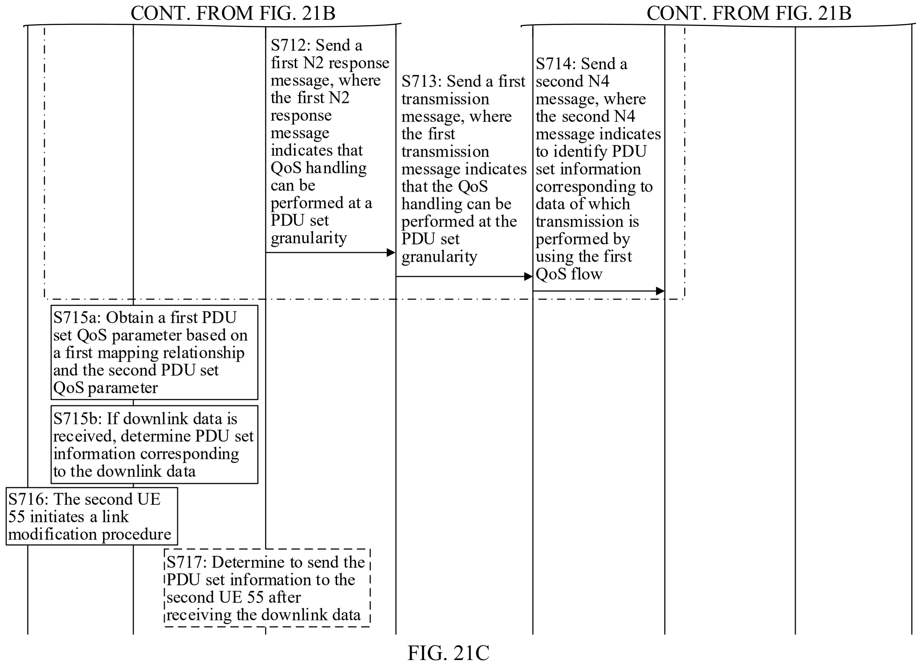

A signaling procedure of the second solution is a combination of FIG. 6 and FIG. 18A to FIG. 18C. As shown in FIG. 21A to FIG. 21C, changes caused by the combination are as follows.

S710: An SMF 70 sends a first N1 message and a first N2 message to an AMF 65, where the first N1 message indicates to establish a first QoS flow, the first N1 message includes a first identifier and a second PDU set QoS parameter, the first identifier indicates the first QoS flow, the first N2 message includes a PDU set QoS parameter and first information, and the first information indicates that the first QoS flow is used for relay data transmission. The AMF 65 sends the first N1 message to the second UE 55, and sends the first N2 message to a RAN 60. That is, both S108 in FIG. 6 and S510 in FIG. 18A to FIG. 18C are included.

A data transmission procedure of the second solution is the same as that in FIG. 20.

This embodiment further provides another implementation for a combined technical solution. The following describes a third solution of this embodiment.

The third solution is specifically a combination of the second implementation of Embodiment 1 and the first implementation of Embodiment 2.

A preceding procedure part of the third solution is the same as that in the first implementation of Embodiment 2, that is, FIG. 11.

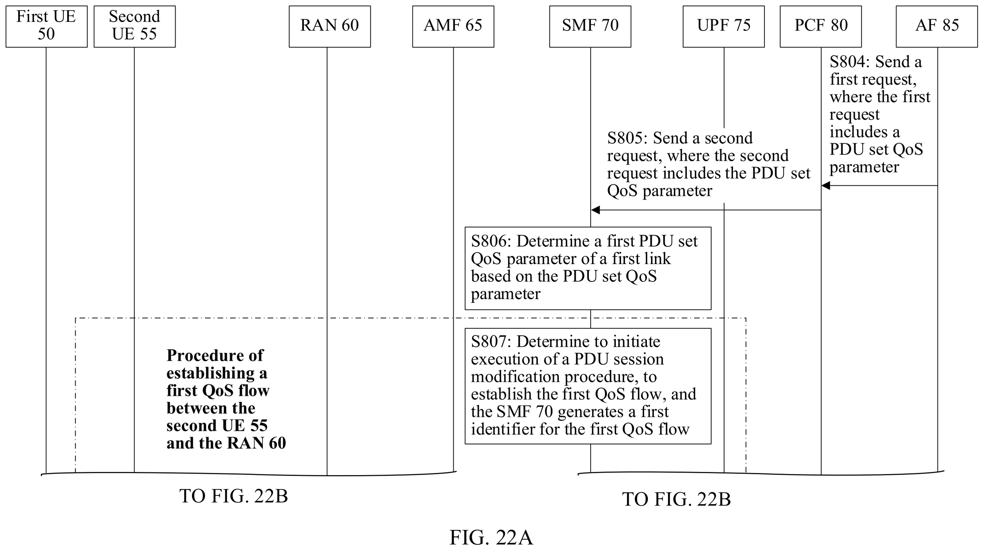

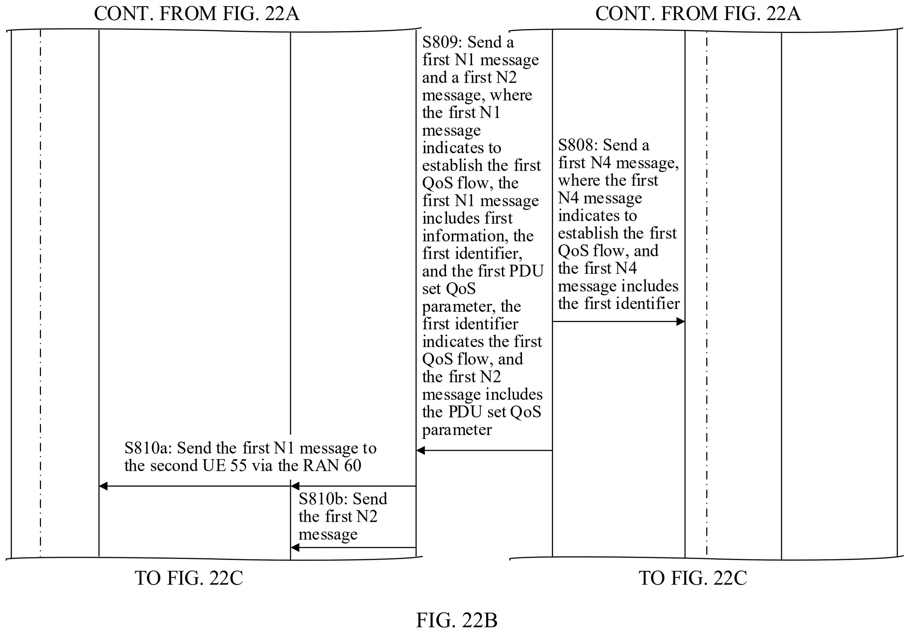

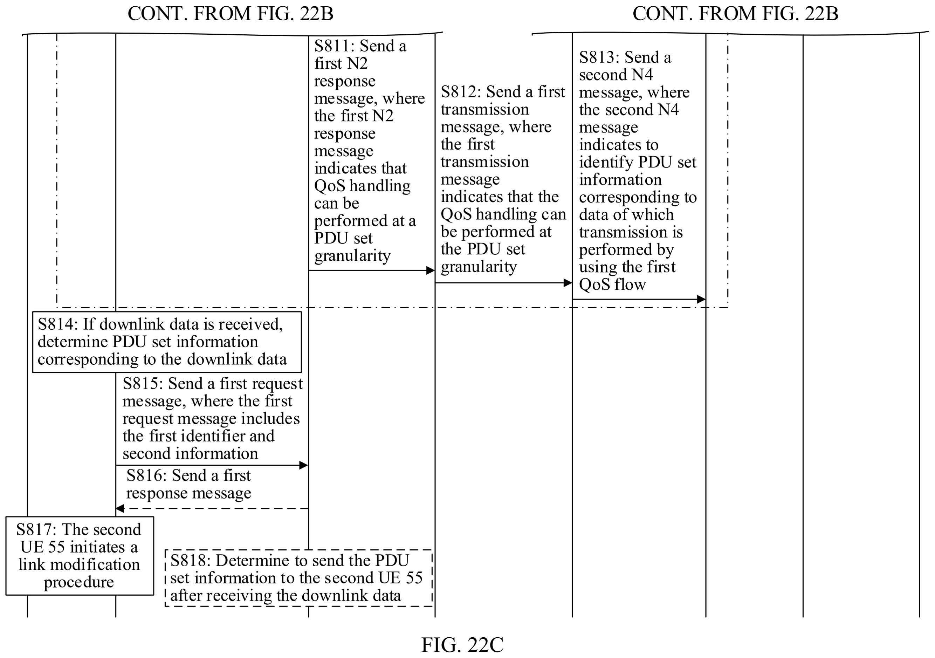

A signaling procedure of the third solution is shown in FIG. 22A to FIG. 22C, is a combination of FIG. 8 and FIG. 12, and includes all procedures in the two figures. Specifically, a main difference lies in the following.

S809: An SMF 70 sends a first N1 message and a first N2 message to an AMF 65, where the first N1 message indicates to establish a first QoS flow, the first N1 message includes first information, a first identifier, and a first PDU set QoS parameter, the first identifier indicates the first QoS flow, and the first N2 message includes a PDU set QoS parameter. This is a combination of the steps in the two figures.

A data transmission procedure of the third solution is the same as that in FIG. 20.

This method is used in an L3 relay scenario.

First, the SMF 70 indicates a RAN 60 via the second UE 55, so that the RAN 60 determines relay data, and the RAN 60 comprehensively determines first QoS handling on the relay data based on a PDU set granularity with reference to states of a first link and a second link.

Then, the SMF 70 sends the first PDU set QoS parameter to the second UE 55, and then the second UE 55 determines second QoS handling of the relay data on the first link with reference to PDU set information corresponding to each PDU set of the relay data.

This embodiment further provides another implementation for a combined technical solution. The following describes a fourth solution of this embodiment.

The fourth solution is specifically a combination of the second implementation of Embodiment 1 and the second implementation of Embodiment 2.

A preceding procedure part of the fourth solution is the same as that in FIG. 17.

A signaling procedure of the fourth solution is a combination of FIG. 8 and FIG. 18A to FIG. 18C, and includes all procedures in the two figures. Specifically, a main difference lies in the following.

An SMF 70 sends a first N1 message and a first N2 message to an AMF 65, where the first N1 message indicates to establish a first QoS flow, the first N1 message includes first information, a first identifier, and a second PDU set QoS parameter, the first identifier indicates the first QoS flow, and the first N2 message includes a PDU set QoS parameter. This is a combination of the steps in the two figures.

A data transmission procedure of the fourth solution is the same as that in FIG. 20.

This method is used in an L3 relay scenario.

First, the SMF 70 indicates a RAN 60 via the second UE 55, so that the RAN 60 determines relay data, and comprehensively determines first QoS handling on the relay data based on a PDU set granularity with reference to states of a first link and a second link.

Then, the SMF 70 sends the second PDU set QoS parameter to the second UE 55. The second UE 55 determines a first PDU set QoS parameter with reference to the parameter by using a mapping relationship obtained in the previous procedure, and then determines second QoS handling of the relay data on the first link by using the first PDU set QoS parameter with reference to PDU set information corresponding to each PDU set of the relay data.

This embodiment further provides another implementation for a combined technical solution. The following describes a fifth solution of this embodiment.

The solution is specifically a combination of the third solution of Embodiment 1 and the first solution of Embodiment 2.

A preceding procedure of the fifth solution is the same as that in FIG. 9.

A signaling procedure of the fifth solution is a combination of FIG. 10 and FIG. 12, and includes all procedures in the two figures. A main difference lies in the following.

An SMF 70 sends a first N1 message and a first N2 message to an AMF 65, where the first N1 message indicates to establish a first QoS flow, the first N1 message includes a first identifier and a first PDU set QoS parameter, the first identifier indicates the first QoS flow, and the first N2 message includes a PDU set QoS parameter and the first identifier. This is a combination of the steps in the two figures.

A data transmission procedure of the fifth solution is the same as that in FIG. 20.

The solution is used in an L2 relay scenario.

First, a RAN 60 may determine relay data based on an L2 relay, and the RAN 60 comprehensively determines first QoS handling on the relay data based on a PDU set granularity with reference to states of a first link and a second link.

Then, the SMF 70 sends the first PDU set QoS parameter to the second UE 55, and then the second UE 55 determines second QoS handling of the relay data on the first link with reference to PDU set information corresponding to each PDU set of the relay data.

This embodiment further provides another implementation for a combined technical solution. The following describes a sixth solution of this embodiment.

The solution is specifically a combination of the third implementation of Embodiment 1 and the second implementation of Embodiment 2.

A preceding procedure of the sixth solution is the same as that in FIG. 9.

A signaling procedure of the sixth solution is a combination of FIG. 10 and FIG. 18A to FIG. 18C, and includes all procedures in the two figures. A main difference lies in the following.

An SMF 70 sends a first N1 message and a first N2 message to an AMF 65, where the first N1 message indicates to establish a first QoS flow, the first N1 message includes a first identifier and a second PDU set QoS parameter, the first identifier indicates the first QoS flow, and the first N2 message includes a PDU set QoS parameter. This is a combination of the steps in the two figures.

A data transmission procedure of the sixth solution is the same as that in FIG. 20.

The six solutions specifically described above organically combine control capabilities of a network and a relay wireless device for data transmission, so that a real-time link state can bring a better experience effect to a user. In addition to the foregoing solutions of this embodiment, as described above, there is another solution. The following describes Embodiment 4.

### Embodiment 4

This embodiment is an implementation in which a wearable device, namely, a first UE 50, comprehensively considers states or link requirements of two subsequent links when performing uplink data transmission. Compared with the downlink data scenario described above, there is a scenario in which the first UE 50 initiates uplink data triggering.

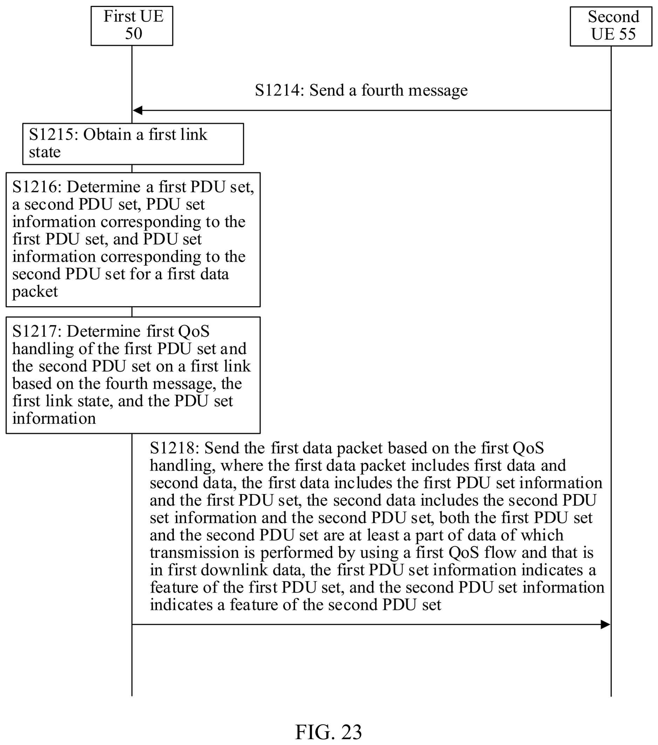

For a procedure before data sending, a procedure of establishing a first QoS flow between a second UE 55 and a RAN 60 is still the same as that in the foregoing embodiments. Because the first UE 50 may trigger, by using uplink application data of the second UE 55, an AF 85 to send a first request, steps after the second UE 55 initiates the link modification procedure in FIG. 7 may alternatively form a procedure in FIG. 23.

S1214: The second UE 55 sends a fourth message to the first UE 50, where the fourth message includes at least one of a second link state, a first PDU set QoS parameter of a first link, or a second PDU set QoS parameter of a second link.

Herein, if the second UE 55 sends a message through a control plane, the message is the fourth message; or if the second UE 55 sends a message through a user plane, the message is sent in an information form.

In a possible implementation, the fourth message includes the second link state (where this is an explicit manner).

In a possible implementation, the fourth message does not include the second link state, and the first UE 50 obtains the second link state based on the fourth message (where this is an implicit manner).

In a possible implementation, the fourth message includes a state of the second link between the second UE 55 and the RAN 60, for example, a state of a Uu interface link; or the fourth message directly indicates the first UE 50 to discard a PDU set with low importance. Directly indicating packet discarding may be because a network or a link state between the second UE 55 and the RAN 60 is congested. For example, a transmission rate, a delay, or a packet discarding rate is lower than a specific threshold in comparison with an average value.

In a possible implementation, the first UE 50 determines the state of the Uu interface link based on measurement of the second UE 55 or delivering of the RAN 60.

In a possible implementation, determining that the second link state is deteriorated or is congested is based on information such as a data transmission rate and a delay on the second link. For example, when the rate is lower than a preset threshold, or the delay exceeds a preset threshold, it may be considered that the link state of the second link is deteriorated or is congested.

In a possible implementation, when the second PDU set QoS parameter is delivered, the first UE 50 obtains the first PDU set QoS parameter by using a first mapping relationship obtained in advance.

S1215: The first UE 50 obtains a first link state.

Before sending uplink data, the first UE 50 first obtains the first link state between the second UE 55 and the first UE 50 in a manner such as measurement or notification by the second UE 55.

S1216: The first UE 50 determines a first PDU set, a second PDU set, PDU set information corresponding to the first PDU set, and PDU set information corresponding to the second PDU set for a first data packet.

Because the first UE 50 constructs the first data packet, the first UE 50 may determine PDU set information corresponding to each PDU set of the first data packet.

In a possible implementation, the first UE 50 includes the PDU set information in a protocol header of the PDU set.

In a possible implementation, the first data packet may be first uplink data.

S1217: The first UE 50 determines first QoS handling of the first PDU set and the second PDU set on the first link based on the fourth message, the first link state, and the PDU set information.

The QoS handling herein may also be expressed as QoS control.

In a possible implementation, the first UE 50 performs comprehensive determining by combining the state of the Uu interface link obtained in S1215 and a state of a PC5/Wi-Fi link obtained in S1216; or directly determines, based on the packet discarding indication obtained in S1216, the first QoS handling of the first data packet on the PC5/Wi-Fi link at a PDU set granularity.

In a possible implementation, when the link state is good, the first UE 50 performs transmission to the second UE 55 based on the PDU set granularity and a requirement of the first PDU set QoS parameter.

In a possible implementation, the first UE 50 may determine a specific link state level based on information such as a data transmission rate and a delay in the state of the PC5 link, perform different packet discarding mechanisms for different link state levels, and set a mapping relationship between a state level of the PC5 link and PDU set importance. For a specific state level of the PC5 link, the RAN 60 discards a data packet with corresponding importance based on the PDU set granularity. Based on different definitions of the state level of the PC5 link, the second UE 55 may report, to the RAN 60, the state level of the PC5 link, or information such as the transmission rate and the delay of the PC5 link, or information indicating that the state of the PC5 link is deteriorated or is congested. For example, importance of the first PDU set may be high, and importance of the second PDU set may be low. A link state level 0 indicates a good state of the PC5 link, and a link state level 1 indicates a poor state of the PC5 link. When the link state level is 0, transmission of both the first PDU set and the second PDU set is performed. When the link state level is 1, the second PDU set with low importance is discarded, and only transmission of the first PDU set is performed.

In a possible implementation, the second UE 55 may directly notify, based on the state of the Uu link, the first UE 50 to discard a PDU set with specific importance on the first link, for example, the second PDU set with low importance.

In this method, the first UE 50 discards a data packet whose PDU set has a low priority, so that an unnecessary waste of transmission resources can be avoided.

S1218: The first UE 50 sends the first data packet to the second UE 55 based on the first QoS handling, where the first data packet includes first data and second data, the first data includes first PDU set information and the first PDU set, the second data includes second PDU set information and the second PDU set, both the first PDU set and the second PDU set are at least a part of data transmitted by using the first QoS flow and that is in first downlink data, the first PDU set information indicates a feature of the first PDU set, and the second PDU set information indicates a feature of the second PDU set.

In a possible implementation, the first data and the second data may not include the PDU set information.

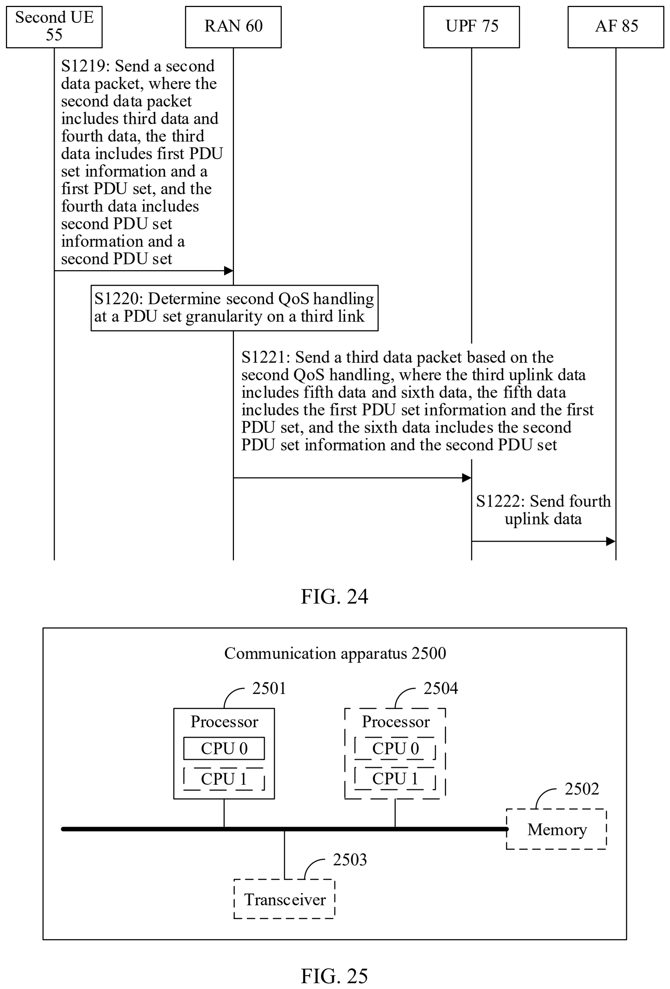

After the uplink data is transmitted to the second UE 55, a possible procedure is shown in FIG. 24.

S1219: The second UE 55 sends second uplink data to the RAN 60, where the second uplink data includes third data and fourth data, the third data includes the first PDU set information and the first PDU set, and the fourth data includes the second PDU set information and the second PDU set.

In a possible implementation, the first data and the second data do not include the PDU set information, and the second UE 55 derives the PDU set information and handles the second uplink data based on the PDU set granularity.

In a possible implementation, the third data and the fourth data may not include the PDU set information.

In a possible implementation, a second data packet may be second uplink data.

S1220: The RAN 60 determines second QoS handling at the PDU set granularity on a third link.

The RAN 60 can determine the second QoS handling based on the indication of the SMF 70 or the indication of the second UE 55, or the RAN 60 can independently determine the second QoS handling in the case of an L2 relay architecture.

The PDU set information is directly obtained from a third message sent by the second UE 55 (the second UE 55 includes the PDU set information in a header) or it is derived that the second UE 55 does not include the PDU set information in the header.

The third link may be an interface N3 between the RAN 60 and a UPF 75.

In a possible implementation, the RAN 60 does not include the PDU set information.

In a possible implementation, the RAN 60 does not perform additional handling, does not upload data based on the PDU set granularity, and uploads the data in a manner of uploading common data.

S1221: The RAN 60 sends third uplink data to the UPF 75 based on the second QoS handling, where the third uplink data includes fifth data and sixth data, the fifth data includes the first PDU set information and the first PDU set, and the sixth data includes the second PDU set information and the second PDU set.

In a possible implementation, the fifth data and the sixth data may not include the PDU set information.

In a possible implementation, based on an optional option in S1220, the PDU set is not considered for uploading herein.

In a possible implementation, a third data packet may be third uplink data.

S1222: The UPF 75 sends fourth uplink data.

The foregoing procedure for sending the data packet may be used in combination with the signaling procedure in the foregoing embodiments.

The foregoing method in embodiments of this application is applicable to a communication system. The communication system includes a first server, a first network device, a first wireless device, and a first terminal. The first server performs the steps performed by the server AF 85 in the foregoing method in embodiments of this application. The first network device performs the steps performed by the AMF 65, the SMF 70, the UPF 75, and the PCF 80 in the foregoing method in embodiments of this application. The first wireless device performs the steps performed by the RAN 60 in the foregoing method in embodiments of this application. The first terminal performs the steps performed by the first UE 50 and the second UE 55 in the foregoing method in embodiments of this application.

An embodiment of this application further provides a chip. The chip may include an input interface, an output interface, and a processing circuit. In this embodiment of this application, the input interface and the output interface may exchange signaling or data related to a first server, a first network device, a first wireless device, or a first terminal, and the processing circuit may generate and process signaling or data information related to the first server, the first network device, the first wireless device, or the first terminal.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method related to the first server, the first network device, the first wireless device, or the first terminal in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and functions related to the first server, the first network device, the first wireless device, or the first terminal in any one of the foregoing embodiments.

An embodiment of this application further provides a computer program product including instructions. When the computer program product runs on a first server, a first network device, a first wireless device, or a first terminal, the first server, the first network device, the first wireless device, or the first terminal is enabled to perform the method and functions related to the first server, the first network device, the first wireless device, or the first terminal in any one of the foregoing embodiments.

An embodiment of this application further provides a computer-readable storage medium, where the computer-readable storage medium stores computer instructions. When a processor runs the instructions, the processor is enabled to perform the method and functions related to the first server, the first network device, the first wireless device, or the first terminal in any one of the foregoing embodiments.

For example, FIG. 25 is a diagram of a structure of a communication apparatus according to an embodiment of this application. The apparatus may be a terminal or a network device, or may be a chip (system) or another part or component that may be disposed in the terminal or the network device. As shown in FIG. 25, the apparatus 2500 may include a processor 2501. Optionally, the apparatus 2500 may further include a memory 2502 or a transceiver 2503. The processor 2501, the memory 2502, and the transceiver 2503 are coupled to each other, for example, may be connected to each other through a communication bus.

The following describes the components of the apparatus 2500 in detail with reference to FIG. 25.

The processor 2501 is a control center of the apparatus 2500, and may be a processor, or may be a generic term of a plurality of processing elements. For example, the processor 2501 is one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

Optionally, the processor 2501 may perform various functions of the apparatus 2500 by running or executing a software program stored in the memory 2502 and by invoking data stored in the memory 2502.

In a specific implementation, in an embodiment, the processor 2501 may include one or more CPUs, for example, a CPU 0 and a CPU 1 shown in FIG. 25.

In a specific implementation, in an embodiment, the apparatus 2500 may alternatively include a plurality of processors, for example, the processor 2501 and a processor 2504 shown in FIG. 25. Each of the processors may be a single-core processor (single-CPU), or may be a multicore processor (multi-CPU). The processor herein may be one or more devices, circuits, and/or processing cores configured to process data (for example, computer program instructions).

The memory 2502 is configured to store a software program for performing the solutions of this application, and the processor 2501 controls execution of the software program. For a specific implementation, refer to the foregoing method embodiments. Details are not described herein again.

Optionally, the memory 2502 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another optical disk storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible by a computer. However, this is not limited thereto. The memory 2502 may be integrated with the processor 2501, or may exist independently, and is coupled to the processor 2501 through an interface circuit (not shown in FIG. 8) of the apparatus 2500. This is not specifically limited in this embodiment of this application.

The transceiver 2503 is configured to communicate with another communication apparatus. For example, the apparatus 2500 is a terminal, and the transceiver 2503 may be configured to communicate with a network device or communicate with another terminal device. For another example, the apparatus 2500 is a network device, and the transceiver 2503 may be configured to communicate with a terminal device or communicate with another network device.

Optionally, the transceiver 2503 may include a receiver and a transmitter (which are not separately shown in FIG. 25). The receiver is configured to implement a receiving function, and the transmitter is configured to implement a sending function.

Optionally, the transceiver 2503 may be integrated with the processor 2501, or may exist independently, and is coupled to the processor 2501 through an interface circuit (not shown in FIG. 25) of the apparatus 2500. This is not specifically limited in this embodiment of this application.

It should be noted that the structure of the apparatus 2500 shown in FIG. 25 does not constitute any limitation on the apparatus 2500. An actual apparatus may include more or fewer components than those shown in the figure, a combination of some components, or a different arrangement of the components.

In addition, for technical effects of the apparatus 2500, refer to technical effects of the method in the foregoing method embodiments. Details are not described herein again.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this application, the computer program code or related data may be included in any proper carrier, so that a device, an apparatus, or a processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

In embodiments of this application, as used in the specification and the appended claims of this application, singular expressions "a", "the", "the foregoing", "this", and "the one" also intend to include expressions such as "one or more", unless the context explicitly indicates the opposite. It should be further understood that, in the following embodiments of this application, "at least one" and "one or more" mean one or more (including two).

Reference to "an embodiment", "some embodiments" or the like described in this specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

It should be noted that, on a premise that no mutual conflict or mutual conflict is introduced, any embodiment of this application and all or some of any features in any embodiment of this application may be combined with each other, and a combined technical solution also falls within the scope of this application.

The foregoing has described the implementations of this application. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A communication method, applied to a first network device, wherein the first network device communicates with a second user equipment UE, and the method comprises:
receiving a first message, wherein the first message comprises an identifier of a first quality of service flow QoS flow and a first QoS parameter that is protocol data unit set PDU set-based;
determining, by the first network device, that the second UE provides a first UE with a function of supporting a connection to a data network; and
performing PDU set-based first handling on the first QoS flow based on a first link state and a second link state, wherein the first link is a communication link between the first UE and the second UE, the second link is a communication link between the second UE and the first network device, the first QoS flow belongs to the first UE or the second UE, the first link state indicates a state of the first link, and the second link state indicates a state of the second link.

2. The method according to claim 1, wherein the first QoS flow belongs to the second UE, comprises:
receiving first indication information; and
determining, based on the first network device, that the second UE provides the first UE with the function of supporting the connection to the data network.

3. The method according to claim 2, wherein the method further comprises:
the first indication information indicates that
the first QoS flow is used by the second UE for transmission of relay data, and the relay data comprises data transmitted between the first UE and the data network via the second UE; or
the second UE provides, by using the first QoS flow, the first UE with the function of supporting the connection to the network.

4. The method according to any one of claims 1 to 3, wherein
the first indication information is first information from the second network device; or
the first indication information is second information from the second UE.

5. The method according to any one of claims 1 to 3, wherein the method comprises:
providing, by the second UE by using an L3 relay or a Wi-Fi hotspot, the first UE with the function of supporting the connection to the data network.

6. The method according to claim 1, wherein the first QoS flow belongs to the first UE, and the method further comprises:
determining that the second UE provides, by using an L2 relay, the first UE with the function of supporting the connection to the data network.

7. The method according to any one of claims 1 to 6, wherein the method comprises:
receiving second indication information, wherein the second indication information indicates to
send PDU set information corresponding to downlink data to the second UE when sending, to the second UE, the downlink data transmitted by using the first QoS flow.

8. The method according to any one of claims 1 to 7, wherein determining, by the first network device, to perform the first handling on the first QoS flow based on the first link state and the second link state comprises:
receiving a first data packet during downlink transmission in the first QoS flow, and obtaining first data and second data from the first data packet; and
sending at least one of the first data or the second data to the second UE based on the first handling.

9. The method according to claim 8, wherein before sending the at least one of the first data or the second data to the second UE based on the first handling, the method comprises:
determining the first handling of the first data and the second data during transmission on the second link, wherein the first handling is determined based on the first link state and the second link state.

10. The method according to claim 8 or 9, wherein
when the first link state indicates a first state, the first handling indicates a first handling manner; or
when the first link state indicates a second state, the first handling indicates a second handling manner, wherein
the first state is different from the second state, and the first handling manner is different from the second handling manner.

11. The method according to claim 10, wherein the first data comprises a first protocol data unit set PDU set and first PDU set information, the second data comprises a second PDU set and second PDU set information, the first PDU set information indicates a feature of the first PDU set, and the second PDU set information indicates a feature of the second PDU set.

12. The method according to claim 11, wherein based on the first link state and the second link state comprises: based on the first link state, the second link state, the first PDU set information, and the second PDU set information.

13. The method according to claim 12, wherein
when the first link state indicates the first state, the first state is congested, and the first PDU set is more important than the second PDU set, the first handling manner is sending the first PDU set and discarding the second PDU set on the second link, wherein
that the first PDU set is more important than the second PDU set is determined based on the first PDU set information and the second PDU set information.

14. The method according to claim 12, wherein
when the first link state indicates the first state, the first state is congested, the first PDU set is important, and the second PDU set is unimportant, the first handling manner is sending the first PDU set and discarding the second PDU set on the second link, wherein
that the first PDU set is important is determined based on the first PDU set information, and that the second PDU set is unimportant is determined based on the second PDU set information.

15. The method according to claim 12, wherein
when the first link state indicates the second state, the second state is non-congested, and the first PDU set is more important than the second PDU set, the second handling manner is sending the first PDU set and the second PDU set on the second link, wherein
that the first PDU set is more important than the second PDU set is determined based on the first PDU set information and the second PDU set information.

16. The method according to claim 12, wherein
when the first link state indicates the second state, the second state is non-congested, the first PDU set is important, and the second PDU set is unimportant, the second handling manner is sending the first PDU set and the second PDU set on the second link, wherein
that the first PDU set is important is determined based on the first PDU set information, and that the second PDU set is unimportant is determined based on the second PDU set information.

17. A communication method, applied to a second user equipment UE, wherein the second UE communicates with a first UE, the first UE communicates with a data network via the second UE, and the method comprises:
obtaining a first parameter, wherein the first parameter indicates a protocol data unit set PDU set-based QoS control parameter of a first quality of service flow QoS flow, and the first QoS flow is a QoS flow used for communication between the first UE and the second UE; and
performing PDU set-based second handling on the first quality of service flow QoS flow.

18. The method according to claim 17, wherein
the first parameter is obtained by the second UE from a second network device; or
the first parameter is obtained by the second UE based on a second parameter, and the second parameter is obtained by the second UE from a second network device.

19. The method according to claim 17 or 18, wherein the first parameter comprises but is not limited to at least one of the following parameters:
a PC5 protocol data unit set delay budget (PC5 PDU Set Delay Budget, PC5-PSDB), used to set a first preset delay, wherein a transmission delay of any PDU set between the first UE and the second UE is less than or equal to the first preset delay;
a PC5 protocol data unit set error rate (PC5 PDU Set Error Rate, PC5-PSER), used to set a ratio of a quantity of PDU sets that have been handled by the second UE but have not been successfully handled by the first UE; or
PC5 protocol data unit set integrated handling information (PC5 PDU Set Integrated Handling Information, PC5-PSIHI), used to set whether the first UE needs all PDUs in a PDU set.

20. The method according to any one of claims 17 to 19, wherein the method further comprises:
sending first indication information to a first network device, wherein the first indication information indicates the second UE to provide the first UE with a function of supporting a connection to the data network.

21. The method according to claim 20, wherein performing the PDU set-based second handling on the first quality of service flow QoS flow comprises:
sending at least one of the first data or the second data to the first UE, wherein the second handling is associated with the first parameter, first PDU set information, and second PDU set information, wherein
the first PDU set information indicates a feature of the first PDU set, the second PDU set information indicates a feature of the second PDU set, the first PDU set information is obtained based on the third data, and the second PDU set information is obtained based on the fourth data.

22. The method according to claim 21, wherein that the first PDU set information is obtained based on the third data, and the second PDU set information is obtained based on the fourth data comprises:
the first PDU set information is obtained from the third data, the third data comprises the first PDU set information, the second PDU set information is obtained from the fourth data, and the fourth data comprises the second PDU set information; or
the first PDU set information is derived based on the third data, and the second PDU set information is derived based on the fourth data.

23. The method according to claim 22, wherein the first PDU set information is derived based on the third data, and the second PDU set information is derived based on the fourth data; and the method comprises:
determining, by the first terminal by parsing packet header information of a first protocol layer corresponding to the third data and packet header information of a first protocol layer corresponding to the fourth data, the first PDU set information corresponding to the third data and the second PDU set information corresponding to the fourth data, wherein
the first protocol layer is an IP layer or a protocol layer above the IP layer.

24. The method according to any one of claims 21 to 23, wherein that the second handling is associated with the first parameter, the first PDU set information, and the second PDU set information comprises:
the second handling is associated with the first parameter, a first link state, the first PDU set information, and the second PDU set information, wherein the first link is a transmission link between the second UE and the first UE, the first QoS flow is a QoS flow on the first link, and the first link state indicates a state of the first link.

25. The method according to claim 24, wherein the method comprises:
when the first link state indicates that the first link is congested, and the first PDU set is more important than the second PDU set, the second handling is sending the first PDU set and discarding the second PDU set on the first link, wherein
that the first PDU set is more important than the second PDU set is determined based on the first PDU set information and the second PDU set information.

26. The method according to claim 25, wherein the method comprises:
when the first link state indicates that the first link is congested, the first PDU set is important, and the second PDU set is unimportant, the second handling is sending the first PDU set and discarding the second PDU set on the first link, wherein
that the first PDU set is important is determined based on the first PDU set information, and that the second PDU set is unimportant is determined based on the second PDU set information.

27. The method according to claim 25 or 26, wherein the method comprises:
when the first link state indicates that the first link is non-congested, and the first PDU set is more important than the second PDU set, the second handling is sending the first PDU set and the second PDU set on the first link, wherein
that the first PDU set is more important than the second PDU set is determined based on the first PDU set information and the second PDU set information; or
when the first link state indicates that the first link is non-congested, the first PDU set is important, and the second PDU set is unimportant, the second handling is sending the first PDU set and the second PDU set on the first link, wherein
that the first PDU set is important is determined based on the first PDU set information, and that the second PDU set is unimportant is determined based on the second PDU set information.

28. A communication method, applied to a first user equipment UE, wherein the first UE communicates with a second UE, the first UE communicates with an access network device via the second UE, and the method comprises:
before performing uplink transmission of a first data packet to the second UE, determining first data and second data from the first data packet; and
sending at least one of the first data or the second data to the second UE based on first handling, wherein the first handling is associated with a first link state and a second link state; and
the first link state indicates a state of a first link, the second link state indicates a state of a second link, the first link is a communication link between the first UE and the second UE, and the second link is a communication link between the second UE and the access network device.

29. The method according to claim 28, wherein
the first data comprises a first protocol data unit set PDU set and first PDU set information, the second data comprises a second PDU set and second PDU set information, the first PDU set information indicates a feature of the first PDU set, and the second PDU set information indicates a feature of the second PDU set; and
based on the first link state and the second link state comprises: based on the first link state, the second link state, the first PDU set information, and the second PDU set information.

30. The method according to claim 28 or 29, wherein the method comprises:
when the second link state indicates a first state, the first handling indicates a first handling manner; or
when the second link state indicates a second state, the first handling indicates a second handling manner, wherein
the first state is different from the second state, and the first handling manner is different from the second handling manner.

31. The method according to claim 30, wherein the method comprises:
when the first link state indicates the first state, the first state is congested, and the first PDU set is more important than the second PDU set, the first handling manner is sending the first PDU set and discarding the second PDU set on the first link, wherein
that the first PDU set is more important than the second PDU set is determined based on the first PDU set information and the second PDU set information.

32. The method according to claim 30 or 31, wherein the method comprises:
when the first link state indicates the second state, the second state is non-congested, the first PDU set is important, and the second PDU set is unimportant, the first handling manner is sending the first PDU set and the second PDU set on the first link, wherein
that the first PDU set is important and the second PDU set is unimportant is determined based on the first PDU set information and the second PDU set information.

33. A first network device, wherein the first network device communicates with a second user equipment UE, the second UE communicates with a first UE, the first UE communicates with a data network via the second UE, and the first network device comprises:
a processor; and
a memory coupled to the processor, wherein the memory stores computer instructions, and when the computer instructions are run by the processor, the first network device is enabled to perform the method according to any one of claims 1 to 16.

34. A user equipment UE, comprising:
a processor; and
a memory coupled to the processor, wherein the memory stores computer instructions, and when the computer instructions are run by the processor, the UE is enabled to perform the method according to any one of claims 17 to 27 or the method according to any one of claims 28 to 32.

35. A computer-readable storage medium, wherein the computer-readable storage medium stores computer instructions, and when the computer instructions are run, the method according to any one of claims 1 to 16, any one of claims 17 to 27, or any one of claims 28 to 32 is performed.

36. A chip, comprising a processor and a memory coupled to the processor, wherein the memory stores a computer program, and when the processor executes the computer program, the method according to any one of claims 1 to 16, any one of claims 17 to 27, or any one of claims 28 to 32 is performed.

37. A computer program product, stored in a computer-readable storage medium, wherein when the computer program product runs, the method according to any one of claims 1 to 16, any one of claims 17 to 27, or any one of claims 28 to 32 is performed.
